# EUROPEAN PATENT APPLICATION

(11) **EP 4 721 955 A1**
(43) Date of publication of application: **08.04.2026**
(21) Application number: 23939694.8
(22) Date of filing: 01.06.2023
(51) Int. Cl.: B29C 59/02

(54) **SHEET MEMBER**

(71) Applicant: NIKON CORPORATION, Tokyo 140-8601 (JP)
(72) Inventor: KAMBAYASHI, Minoru, Tokyo 140-8601 (JP); NISHIDA, Kazuki, Tokyo 140-8601 (JP); AOKI, Hidemasa, Tokyo 140-8601 (JP); NAITO, Kaneyuki, Tokyo 140-8601 (JP); UMEMOTO, Sora, Tokyo 140-8601 (JP)
(74) Representative: Hoffmann Eitle
(86) International application number: PCT/JP2023/020469
(87) International publication number: WO 2024/247220

(57) **Abstract**

A sheet member 1 includes: a front surface 111 including a first area 130 and a second area 140; a back surface 122; and a through-hole 15 formed between the front surface and the back surface, the first area 130 is a surface of a convex structure 13 that is formed as at least a part of the riblet structure RB and that protrudes from the second area, and an opening 151 of the through-hole 15 is formed in the second area 140.

## Description

### Technical Field

The present invention relates to a technical field of a sheet member having a riblet structure, for example.

### Background Art

A Patent literature 1 discloses an aircraft including an airframe on a surface of which a riblet structure is formed. In this case, it is required to easily form the riblet structure on a surface of an object such as the aircraft.

### Citation List

### Patent Literature

Patent Literature 1: US2011/0186685A1

### Summary of Invention

A first aspect provides a sheet member having a riblet structure, wherein the sheet member includes: a front surface including a first area and a second area; a back surface; and a through-hole formed between the front surface and the back surface, the first area is a surface of a convex structure that is formed as at least a part of the riblet structure and that protrudes from the second area, and an opening of the through-hole is formed in the second area.

A second aspect provides a sheet member having a riblet structure, wherein the sheet member includes: a through-hole formed between a front surface and a back surface.

A third aspect provides a sheet member having a riblet structure, wherein a front surface includes: a first surface on which the riblet structure is formed; and a second surface that is different from the first surface, a back surface includes a third surface that is opposite to the first surface; and a fourth surface that is opposite to the second surface, an adhesive surface for attaching the sheet member to an object is formed on the third surface, and the adhesive surface is not formed on the fourth surface.

A fourth aspect provides a sheet member having a riblet structure on a front surface, wherein a back surface includes an adhesive surface of an adhesive layer, and the adhesive layer includes: a first adhesive layer part having a first thickness; and a second adhesive layer part having a second thickness that is different from the first thickness.

A fifth aspect provides a sheet member having a riblet structure on a front surface, wherein a back surface includes an adhesive layer, and the adhesive layer includes: a first adhesive part having a first adhesive property; and a second adhesive part having a second adhesive property that is different from the first adhesive property.

A sixth aspect provides a sheet member having a riblet structure, wherein the sheet member includes: a first surface on which the riblet structure is formed; and a second surface which is different from the first surface and on which the riblet structure is not formed, on a front surface.

### Brief Description of Drawings

[FIG. 1] FIG. 1(a) is a perspective view that illustrates an external appearance of a riblet sheet in a present example embodiment, and FIG. 1(b) is a cross-sectional view (I-I' cross-sectional view in FIG. 1(a)) that illustrates a structure of the riblet sheet in the present example embodiment.
[FIG. 2] FIG. 2(a) is a perspective view that illustrates a riblet structure, FIG. 2(b) is a cross-sectional view (II-II' cross-sectional view in FIG. 2(a)) that illustrates the riblet structure, and FIG. 2(c) is a top view that illustrates the riblet structure.
[FIG. 3] FIG. 3(a) is a front view that illustrates an aircraft that is one example of an object to which the riblet sheet is attached, and FIG. 3(b) is a side view that illustrates the aircraft that is one example of the object to which the riblet sheet is attached.
[FIG. 4] Each of FIG. 4(a) and FIG. 4(b) is a cross-sectional view that illustrates the object to which the riblet sheet is attached.
[FIG. 5] FIG. 5 illustrates a first specific example of a position at which an opening of a through-hole is formed.
[FIG. 6] FIG. 6 illustrates a second specific example of the position at which the opening of the through-hole is formed.
[FIG. 7] Each of FIG. 7(a) to FIG. 7(b) illustrates one example of the through-hole that is formed in the riblet sheet.
[FIG. 8] Each of FIG. 8(a) to FIG. 8(b) illustrates one example of the through-hole that is formed in the riblet sheet.
[FIG. 9] Each of FIG. 9(a) to FIG. 9(d) is a plan view that illustrates a shape of the through-hole.
[FIG. 10] FIG 10(a) is a plan view that illustrates the riblet sheet in which a single opening (a single through-hole) is formed, and FIG 10(b) is a plan view that illustrates the riblet sheet in which a plurality of openings (a plurality of through-holes) are formed.
[FIG. 11] Each of FIG 11(a) to FIG. 11(e) is a plan view that illustrates the riblet sheet in which the plurality of openings, which are distributed at equal intervals, are formed.
[FIG. 12] FIG 12 is a plan view that illustrates the riblet sheet in which the plurality of openings, which are distributed periodically, are formed.
[FIG. 13] Each of FIG. 13(a) and FIG. 13(b) is a plan view that illustrates the riblet sheet in which the plurality of openings, which are distributed unevenly, are formed.
[FIG. 14] Each of FIG. 14(a) to FIG. 14(d) is a cross-sectional view that illustrates a shape of a cross-section of the through-hole.
[FIG. 15] Each of FIG. 15(a) to FIG. 15(d) is a cross-sectional view that illustrates the shape of the cross-section of the through-hole.
[FIG. 16] Each of FIG. 16(a) to FIG. 16(c) is a cross-sectional view that illustrates a process for manufacturing the riblet sheet by an imprint lithography using a mold.
[FIG. 17] FIG. 17 illustrates the riblet sheet in a second modified example.
[FIG. 18] Each of FIG. 18(a) and FIG. 18(b) illustrates the riblet sheet in the second modified example.
[FIG. 19] FIG. 19 illustrates the riblet sheet in a third modified example.
[FIG. 20] FIG. 20 is a cross-sectional view that illustrates the riblet sheet in a fourth modified example.
[FIG. 21] FIG. 21 is a perspective view that illustrates the riblet sheet in a fifth modified example.
[FIG. 22] FIG. 22 is a cross-sectional view that illustrates the riblet sheet in a sixth modified example.
[FIG. 23] FIG. 23 is a cross-sectional view that illustrates the riblet sheet in a seventh modified example.
[FIG. 24] Each of FIG. 24(a) to FIG. 24(c) is a cross-sectional view that illustrates a method for attaching the riblet sheet to an object in an eighth modified example.
[FIG. 25] FIG. 25 is a cross-sectional view that illustrates the riblet sheet in a ninth modified example.
[FIG. 26] Each of FIG. 26(a) to FIG. 26(b) is a cross-sectional view that illustrates a process for manufacturing the riblet sheet in the ninth modified example.

### Description of Example embodiments

Next, with reference to drawings, an example embodiment of a sheet member will be described.

### (1) Structure of Riblet Sheet 1

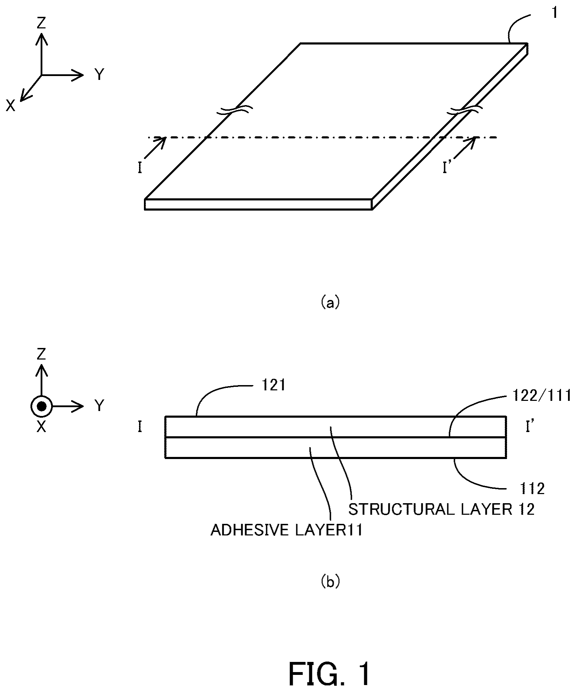

First, with reference to FIG. 1(a) to FIG. 1(b), a structure of a riblet sheet 1, which is one example of the example embodiment of the sheet member, will be described. FIG. 1(a) is a perspective view that illustrates an external appearance of the riblet sheet 1 in the present example embodiment, and FIG. 1(b) is a cross-sectional view (I-I' cross-sectional view in FIG. 1(a)) that illustrates the structure of the riblet sheet 1 in the present example embodiment.

As illustrated in FIG. 1(a) and FIG. 1(b), the riblet sheet 1 is a film-like (in other words, sheet-like, layered-like, foil-like, tape-like, or band-like) sheet member. Note that the sheet member may be referred to as a film member. In the example illustrated in FIG. 1(a) and FIG. 1(b), a Y-axis direction corresponds to a width direction of the riblet sheet 1, and a Z-axis direction corresponds to a thickness direction of the riblet sheet 1. The riblet sheet 1 is a film-like sheet member in which a thickness of the riblet sheet 1 is much smaller than a width of the riblet sheet 1. As one example, the width of the riblet sheet 1 may be equal to or wider than several centimeters, may be equal to or wider than ten centimeters, may be equal to or wider than several tens of centimeters, or may be equal to or wider than one meter. On the other hand, the thickness of the riblet sheet 1 may be equal to or thinner than one millimeter, may be equal to or thinner than one centimeter, or may be equal to or thinner than several centimeters.

The riblet sheet 1 may have a longitudinal shape extending along a length direction that intersects the width direction and the thickness direction. In other words, the riblet sheet 1 may have a longitudinal shape in which the direction intersecting the width direction and the thickness direction is the longitudinal direction. In the example illustrated in FIG. 1(a) and FIG. 1(b), a X-axis direction is the length direction (the longitudinal direction) of the riblet sheet 1. As one example, the length of the riblet sheet 1 may be equal to or longer than several centimeters, may be equal to or longer than several tens of centimeters, may be equal to or longer than several tens of centimeters, may be equal to or longer than one meter, may be equal to or longer than ten meters, or may be equal to or longer than several tens of meters.

However, the riblet sheet 1 may not have the longitudinal shape extending along the length direction that intersects the width direction and thickness direction. For example, the riblet sheet 1 may have a rectangular shape in a planar view. As one example, the riblet sheet 1 extending along the length direction may be divided into a plurality of sheet members, each of which has a rectangular shape, along the length direction.

As illustrated in FIG. 1(b), the riblet sheet 1 includes an adhesive layer 11 and a structural layer 12. Specifically, the riblet sheet 1 has a laminated structure in which the adhesive layer 11 and the structural layer 12 are laminated. The adhesive layer 11 and the structural layer 12 are laminated so that a front surface 111 (a surface facing a +Z side in the example illustrated in FIG. 1(b)) of the adhesive layer 11 faces a back surface 122 (a surface facing a -Z side in the example illustrated in FIG. 1(b)) of the structural layer 12. Namely, the adhesive layer 11 and the structural layer 12 are laminated so that the adhesive layer 11 is formed on the back surface 122 of the structural layer 12. In other words, the adhesive layer 11 and the structural layer 12 are laminated so that the structural layer 12 is formed on the front surface 111 of the adhesive layer 11. In this case, a front surface 121 (a surface facing the +Z side in the example illustrated in FIG. 1(b)) of the structural layer 12 may be regarded as a front surface of the riblet sheet 1. On the other hand, a back surface 112 (a surface facing the -Z side in the example illustrated in FIG. 1(b)) of the adhesive layer 11 may be regarded as a back surface of the riblet sheet 1.

The adhesive layer 11 is a layer that includes an adhesive for adhering the riblet sheet 1 to an object OBJ (for example, a movable body described later). In other words, the adhesive layer 11 is a layer that includes the adhesive for adhering the structural layer 12 to the object OBJ (for example, the movable body described later). Therefore, the riblet sheet 1 (especially, the structural layer 12) may be attached to the object OBJ through the adhesive layer 11. Namely, the riblet sheet 1 (especially, the structural layer 12) may be attached to the object OBJ by using the adhesive layer 11. Note that the riblet sheet 1 may not include the adhesive layer 11. In this case, an operator may apply the adhesive between the object and the riblet sheet 1 to attach the riblet sheet 1 to the object.

Specifically, at least a part of the back surface 112 (the surface facing the -Z side in the example illustrated in FIG. 1(b)) of the adhesive layer 11 is an adhesive surface for adhering the riblet sheet 1 (especially, the structural layer 12) to the object OBJ. Namely, the back surface 112 of the adhesive layer 11 includes the adhesive surface for adhering the riblet sheet 1 (especially, the structural layer 12) to the object OBJ. In this case, the riblet sheet 1 (especially, the structural layer 12) may be adhered to the object OBJ by the back surface 112 (the adhesive surface) of the adhesive layer 11 contacting with the object OBJ.

The structural layer 12 is a layer in which a riblet structure RB is formed. Namely, the structural layer 12 is a layer including the riblet structure RB. Therefore, the riblet sheet 1 is a sheet member in which the riblet structure RB is formed. Namely, the riblet sheet 1 is a sheet member including the riblet structure RB. However, in FIG. 1(a) and FIG. 1(b), the riblet structure RB formed in the structural layer 12 is omitted for a simplicity of the drawings.

Specifically, the riblet structure RB is formed on at least a part of the front surface 121 of the structural layer 12. Therefore, the structural layer 12 is a layer in which the riblet structure RB is formed on at least a part of its front surface 121. Namely, the structural layer 12 is a layer including the riblet structure RB on at least a part of its front surface 121. Therefore, the riblet sheet 1 is a sheet member including the riblet structure RB formed on at least a part of its front surface 121. Namely, the riblet sheet 1 is a sheet member including the riblet structure RB on at least a part of its front surface 121.

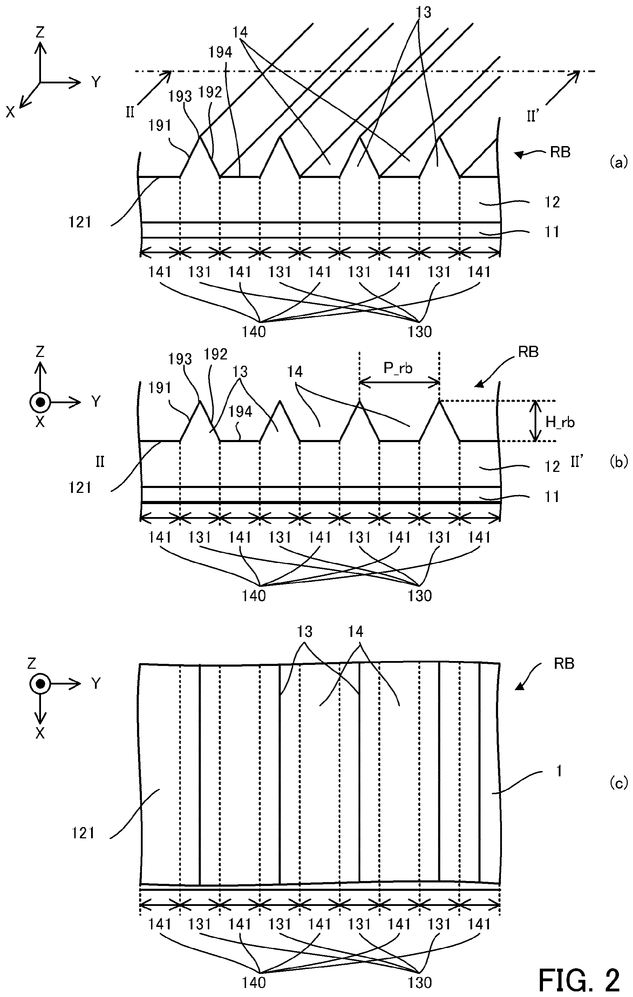

One example of the riblet structure RB is illustrated in FIG. 2(a) to FIG. 2(c). FIG. 2(a) is a perspective view that illustrates the riblet structure RB, FIG. 2(b) is a cross-sectional view (II-II' cross-sectional view in FIG. 2(a)) that illustrates the riblet structure RB, and FIG. 2(c) is a top view that illustrates the riblet structure RB.

As illustrated in FIG. 2(a) to FIG. 2(c), the riblet structure RB may include a convex structure 13. Namely, the convex structure 13 may be formed on the front surface 121 of the structural layer 12 as at least a part of the riblet structure RB. Especially, as illustrated in FIG. 2(a) to FIG. 2(c), the riblet structure RB may include a plurality of convex structures 13. Namely, the plurality of convex structures 13 may be formed on the front surface 121 of the structural layer 12 as at least a part of the riblet structure RB.

Each of the plurality of convex structures 13 may extend along a predetermined extension direction. In this case, the riblet structure RB may include the plurality of convex structures 13 each of which extends along the predetermined extension direction. Each of the plurality of convex structures 13 may be arranged along a predetermined arrangement direction. In this case, the riblet structure RB may include the plurality of convex structures 13 that are arranged along the predetermined arrangement direction.

As one example, the riblet structure RB may include a structure in which the plurality of convex structures 13, each of which extends along the predetermined extension direction, are arranged along the predetermined arrangement direction that intersects the predetermined extension direction. Namely, the riblet structure RB may include a structure in which the plurality of convex structures 13, each of which is formed to extend along the predetermined extension direction, are arranged along the predetermined arrangement direction that intersects the predetermined extension direction. Each of the extension direction and the arrangement direction may be a direction that is along the front surface 121. Each of the extension direction and the arrangement direction may be a direction that intersects a below-described height direction along which the convex structure 13 protrudes. may be. Moreover, one of the extension direction and the arrangement direction may be the longitudinal direction of the riblet sheet 1, and the other one of the extension direction and the arrangement direction may be a transverse direction of the riblet sheet 1. In the example illustrated in FIG. 2(a) to FIG. 2(c), the riblet structure RB includes a structure in which the plurality of convex structures 13, each of which extends along a X-axis direction, are arranged along a Y-axis direction. Namely, FIG. 2(a) to FIG. 2(c) illustrate an example in which the predetermined extension direction is the X-axis direction and the predetermined arrangement direction is the Y-axis direction that intersects (typically, is orthogonal to) the X-axis direction.

The convex structure 13 is a structure that protrudes from a surrounding area along the predetermined height direction. The convex structure 13 is a structure that protrudes from the surrounding area along predetermined height direction that intersects both the predetermined extension direction, along which the convex structure 13 extends, and the predetermined arrangement direction, along which the convex structures 13 are arranged. Note that the height direction may be the thickness direction of the riblet sheet 1. In the examples illustrated in FIG. 2(a) to FIG. 2(c), the convex structure 13 is a structure that protrudes from the surrounding area along a Z-axis direction that is the thickness direction of the riblet sheet 1. Namely, FIG. 2(a) to FIG. 2(c) illustrates an example in which the predetermined height direction is the Z-axis direction that intersects (typically, is orthogonal to) the X-axis direction and the Y-axis direction.

The convex structure 13 includes a pair of side surfaces 191 and 192 that face in directions opposite to each other, respectively, for example. Note that a "state in which one surface faces in the direction opposite to each other" in the present example embodiment may mean a state in which one surface faces toward one side of an axis, which intersects the one surface and the other surface, and the other surface faces toward other side (namely, an opposite side) of the same axis. In the example illustrated in FIG. 2(a) to FIG. 2(c), the convex structure 13 includes a side surface 191 facing the -Y side and the side surface 192 facing the +Y side. Each of the pair of side surfaces 191 and 192 is a planar surface. However, at least one of the pair of side surfaces 191 and 192 may include a curved surface.

The pair of side surfaces 191 and 192 may be non-parallel to each other. In this case, the pair of side surfaces 191 and 192 of the convex structure 13 may be connected to each other through one end parts (upper end parts at the +Z side in the example illustrated in FIG. 2(a) to FIG. 2(c)) thereof. A part at which the pair of side surfaces 191 and 192 of the convex structure 13 are connected forms a corner part 193 of the convex structure 13. The corner part 193 of the convex structure 13 may form a vertex of the convex structure 13. The corner part 193 of the convex structure 13 may form a ridge line of the convex structure 13. The corner part 193 of the convex structure 13 may form a boundary part of the pair of side surfaces 191 and 192 of the convex structure 13. In this case, the pair of side surfaces 191 and 192 may be considered to be connected to each other through the corner part 193 of the convex structure 13. In the examples illustrated in FIG. 2(a) to FIG. 2(c), the pair of side surfaces 191 and 192 are connected so that the upper end part of the side surface 191 contacts the upper end part of the side surface 192.

The convex structure 13 may be a structure that is formed by the pair of side surfaces 191 and 192. The convex structure 13 may be a structure whose surface includes the pair of side surfaces 191 and 192. In this case, a shape of a cross-section of the convex structure 13 including the Z-axis may be a triangular shape. In this case, the shape of the cross-section of the convex structure 13 including the Z-axis may be a symmetrical triangular shape, or may be an asymmetrical triangular shape. However, the shape of the cross-section of the convex structure 13 including the Z-axis may be any shape that is different from the triangular shape.

Note that the side surfaces 191 and 192 may be referred to as inclined surfaces 191 and 192, respectively. The front surface 121 of the structural layer 12 may be considered to include the side surfaces 191 and 192. Moreover, in a case where the corner part 193 (the vertex or the ridge line) of the convex structure 13 is not a corner but a curved surface (a convex surface), the front surface 121 of the structural layer 12 may be considered to include the corner part 193.

A groove structure 14 that is recessed relative to an surrounding area is formed between adjacent convex structures 13. Therefore, the riblet structure RB may include a structure in which a plurality of groove structures 14, each of which extends along the predetermined extension direction, are arranged along the predetermined arrangement direction. Namely, the riblet structure RB may include a structure in which the plurality of groove structures 14, each of which is formed to extend along the predetermined extension direction, are arranged along the predetermined arrangement direction. Note that the groove structure 14 may be regarded as a structure that is recessed with respect to the vertex or the ridge line (for example, the corner part 193 described above) of the convex structures 13.

The groove structure 14 may be regarded as a structure that is positioned between the side surface 191 of one convex structure 13 and the side surface 192 of another convex structure 13 that is adjacent to the one convex structure 13 along the arrangement direction along which the convex structures 13 are arranged. Specifically, the side surface 191 of one convex structure 13 and the side surface 192 of another convex structure 13, which is adjacent to the one convex structure 13 along a first arrangement direction along which the convex structures 13 are arranged, may be connected through a boundary part 194 that connects other end parts thereof (lower end parts at the -Z side in the example illustrated in FIG. 2(a) to FIG. 2(c)). Namely, the side surfaces 191 and 192, which face each other, of two adjacent convex structures 13 may be connected through the boundary part 194 that forms a boundary between the two adjacent convex structures 13. In the example illustrated in FIG. 2(a) to FIG. 2(c), the boundary part 194 includes a surface that intersects each of the side surfaces 191 and 192 that are connected by the boundary part 194. In this case, the groove structure 14 may be a structure that is formed by the boundary part 194. The groove structure 14 may be a structure that includes a groove facing the boundary part 194. The boundary part 194 may be regarded as a bottom surface of the groove structure 14. In this case, a boundary between the boundary part 194 and each of the side surfaces 191 and 192 may be used as a boundary between the convex structure 13 and the groove structure 14. Note that the groove structure 14 may be referred to as a groove-shaped structure or a concave structure.

However, in some cases, the groove structure 14 may be regarded as a structure that is formed by the side surfaces 191 and 192, which are connected by the boundary part 194, and the boundary part 194. The groove structure 14 may be regarded as a structure that includes a groove facing the side surfaces 191 and 192, which are connected by the boundary part 194, and the boundary part 194. Namely, the side surfaces 191 and 192 may be regarded as side surfaces of the groove structure 14.

Note that the front surface 121 of the structural layer 12 may be considered to include the boundary part 194 (for example, the bottom surface of the groove structure 14) in addition to or instead of the side surfaces 191 and 192.

In this way, the convex structure 13 (especially, the plurality of convex structures 13) and the groove structure 14 (especially, the plurality of groove structures 14) are formed as at least a part of the riblet structure RB on the front surface 121 of the structural layer 12. Namely, the front surface 121 of the structural layer 12 includes a convex area 130 in which the convex structure 13 (especially, the plurality of convex structures 13) is formed and a groove area 140 in which the groove structure 14 (especially, the plurality of groove structures 14) is formed. In this case, the convex area 130, which is a part of the front surface 121 of the structural layer 12, may be considered to be equivalent to a front surface of the convex structure 13. The convex structure 13 may be regarded as a structure that protrudes from the groove area 140 which is a part of the front surface 121 of the structural layer 12.

Note that a minute uneven structure may be considered to be formed in the groove area 140 depending on a flatness of a surface of the groove area 140, although the convex structure 13 is not formed in the groove area 140. Even in this case, a height of a convex structure of the minute uneven structure formed in the groove area 140 is lower than a height H_rb of the convex structure 13 formed in the convex area 130. In other words, the minute uneven structure, which includes the convex structure whose height is lower than the height H_rb of the convex structures 13 formed in the convex area 130, may be formed in the groove area 140. Moreover, a pitch (namely, an arrangement period) of the convex structures included in the minute uneven structure formed in the groove area 140 is shorter than a pitch P_rb of the convex structures 13 formed in the convex area 130. In other words, the minute uneven structure, which includes the convex structures arranged at a pitch shorter than the pitch P_rb of the convex structures 13 formed in the convex area 130, may be formed in the groove area 140.

In any case, the fact remains that the flatness of the groove area 140 is lower than the flatness of the convex area 130. Therefore, the groove area 140 may include the minute uneven structure as long as the flatness of the groove area 140 is lower than the flatness of the convex area 130.

In a case where the plurality of convex structures 13 are formed in the convex area 130, the convex area 130 may be considered to include a plurality of partial convex areas 131 in which the plurality of convex structures 13 are formed, respectively. Each partial convex area 131 may be an area extending along a direction (the X-axis direction in the example illustrated in FIG. 2(a) to FIG. 2(c)) along which the convex structure 13 formed in each partial convex area 131 extends. Namely, each partial convex area 131 may be an area whose longitudinal direction is the direction (the X-axis direction in the example illustrated in FIG. 2(a) to FIG. 2(c)) along which the convex structure 13 formed in each partial convex area 131 extends. Similarly, in a case where the plurality of groove structures 14 are formed in the groove area 140, the groove area 140 may be considered to include a plurality of partial groove areas 141 in which the plurality of groove structures 14 are formed, respectively. Each partial groove area 141 may be an area extending along a direction (the X-axis direction in the example illustrated in FIG. 2(a) to FIG. 2(c)) along which the groove structure 14 formed in each partial groove area 141 extends. Namely, each partial groove area 141 may be an area whose longitudinal direction is the direction (the X-axis direction in the example illustrated in FIG. 2(a) to FIG. 2(c)) along which the groove structure 14 formed in each partial groove area 141 extends. In this case, each partial convex area 131 is positioned between two adjacent partial groove areas 141. Similarly, each partial groove area 141 is positioned between two adjacent partial convex areas 131.

The plurality of convex structures 13 may be formed so that the plurality of convex structures 13 are arranged in a regular pattern. For example, the plurality of convex structures 13 may be formed so that the plurality of convex structures 13 are arranged along the predetermined arrangement direction with equal pitch. For example, the plurality of convex structures 13 may be formed so that structure groups, each of which includes at least two convex structures 13, are arranged along the predetermined arrangement direction at equal pitch. The plurality of convex structures 13 may be formed so that at least two convex structures 13 are arranged in a regular pattern in accordance with a first rule in a first part of the front surface 121 of the structural layer 12 and at least two convex structures 13 are arranged in a regular pattern in accordance with the same first rule in a second part of the front surface 121 of the structural layer 12. The plurality of convex structures 13 may be formed so that at least two convex structures 13 are arranged in a regular pattern in accordance with a first rule in a first part of the front surface 121 of the structural layer 12 and at least two convex structures 13 are arranged in a regular pattern in accordance with a second rule different from the first rule in a second part of the front surface 121 of the structural layer 12. Note that a state in which the plurality of convex structures 13 are arranged in a regular pattern may be considered to be equivalent to a state in which the plurality of groove structures 14 are arranged in a regular pattern, because the convex structures 13 and the groove structures 14 are formed alternately.

The height H_rb of at least one of the plurality of convex structures 13 may be set to a height determined based on the pitch P_rb of the convex structures 13. For example, the height H_rb of at least one of the plurality of convex structures 13 may be equal to or less than the pitch P_rb of the convex structures 13. For example, the height H_rb of at least one of the plurality of convex structures 13 may be equal to or less than half of the pitch P_rb of the convex structures 13. Furthermore, the height H_rb of at least one of the plurality of convex structures 13 may be within a range of half of the pitch P_rb of the convex structures 13 ± 10%. Note that the height H_rb may be a height from the bottom surface of the groove structure 14 (namely, the boundary part 194). The height H_rb may be referred to as a depth from the vertex or the ridge line (namely, the corner part 193) of the convex structure 13.

The riblet structure RB may be used as a structure by which a resistance (especially, at least one of a frictional resistance and a turbulent frictional resistance) of the front surface of the riblet sheet 1 (namely, the front surface 121 of the structural layer 12) to a fluid is reducible. In this case, the front surface 121 of the structural layer 12 in which the riblet structure RB is formed may be regarded as a surface by which the resistance of the riblet sheet 1 (typically, the front surface 121 of the structural layer 12) to the fluid is reducible.

As described above, the riblet sheet 1 in which the riblet structure RB is formed may be attached to the object OBJ through the adhesive layer 11. In this case, the riblet structure RB may be used as a structure by which a resistance (especially, at least one of a frictional resistance and a turbulent frictional resistance) of a front surface of the object OBJ, to which the riblet sheet 1 is attached, to the fluid is reducible. Therefore, the riblet sheet 1 may be attached to the object OBJ including a member that is disposed (in other words, positioned) in the fluid. Note that a term "fluid" means any medium (for example, at least one of gas and liquid) that flows relative to the front surface of the object OBJ. For example, in a case where the front surface of object OBJ moves relative to the medium although the medium itself is static, this medium may be referred to as the fluid. Note that a state where the medium is static may mean a state where the medium does not move relative to a predetermined reference object (for example, a ground surface).

Attaching the riblet sheet 1 to the object OBJ may be considered to be equivalent to forming the riblet structure RB on the front surface of the object OBJ. In this case, in a case where the riblet structure RB is formed on the front surface of the object OBJ by attaching the riblet sheet 1 to the object OBJ, the riblet structure RB can be formed on the front surface of the object OBJ more easily, compared to a case where the riblet structure RB is formed directly on the front surface of the object OBJ without using the riblet sheet 1. This is because it is sufficient to attach the riblet sheet 1 to the object OBJ in order to form the riblet structure RB on the surface of the object OBJ.

The movable body is one example of the object OBJ to which the riblet sheet 1 is attached. Especially, the movable body that is movable in the fluid the example of the object OBJ to which the riblet sheet 1 is attached. At least one of a railway vehicle, an automobile, an aircraft, a ship, a windmill, and a turbine is one example of the movable body.

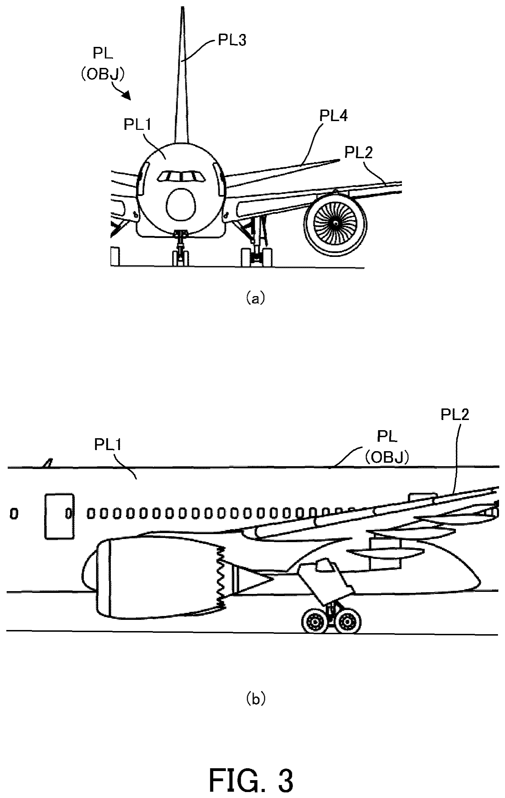

For example, FIG. 3(a) to 3(b) illustrate an aircraft PL in which the riblet sheet 1 is attached to at least a part of its surface. As illustrated in FIG. 3(a) to FIG. 3(b), the riblet sheet 1 may be attached to at least a part of a fuselage PL1 of the aircraft PL. The riblet sheet 1 may be attached to at least a part of a main wing PL2 of the aircraft PL. The riblet sheet 1 may be attached to at least a part of a vertical tail PL3 of the aircraft PL. The riblet sheet 1 may be attached to at least a part of a horizontal tail PL4 of the aircraft PL.

In a case where the riblet sheet 1 is attached to at least a part of the surface of the movable body (alternatively, any object OBJ, the same applies in the below-described description), the movable body is movable relative to the fluid relatively easily. Therefore, the resistance that prevents the movable body from moving relative to the fluid is reduced, and thereby an energy saving is achievable. Namely, it is possible to manufacture the environmentally preferable movable body. For example, in a case where the riblet sheet 1 is attached to at least a part of the surface of the aircraft, the resistance that prevents the aircraft from moving is reduced, and thereby a fuel saving of the airplane is achievable. For example, in a case where the riblet sheet 1 is attached to at least a part of the surface of a windmill (for example, a blade member of the windmill), the resistance that prevents the windmill from moving (typically, rotating) is reduced, and thereby a high efficiency of the windmill is achievable. For example, in a case where the riblet sheet 1 is attached to at least a part of the surface of the turbine for an engine (especially, a turbine blade), the resistance that prevents the turbine for the engine from moving (typically, rotating) is reduced, and thereby a high efficiency or energy saving of the turbine for the engine is achievable. For example, in a case where the riblet sheet 1 is attached to at least a part of the surface of the turbine for a power generation(especially, a turbine blade), the resistance that prevents the turbine for the power generation from moving (typically, rotating) is reduced, and thereby a high efficiency or energy saving of the turbine for the power generation is achievable. Therefore, there is a possibility that the riblet sheet 1 can contribute "13-2-2 Total Greenhous gas emission per year" in indicators included in Goal 13 (Take urgent action to combat climate change and its impact) of Sustainable Development Goals (SDGs) initiated by United Nations.

The riblet sheet 1 may be attached to the object OBJ by an application apparatus for attaching the riblet sheet 1 to the object OBJ. The application apparatus may automatically attach the riblet sheet 1 to the object OBJ without an work of the operator. The application apparatus may semi-automatically attach the riblet sheet 1 to the object OBJ by using the work of the operator. The application apparatus may assist the operator to attach the riblet sheet 1 to the object OBJ.

### (2) Technical Problem Occurring In Attaching Riblet Sheet 1 To Object OBJ

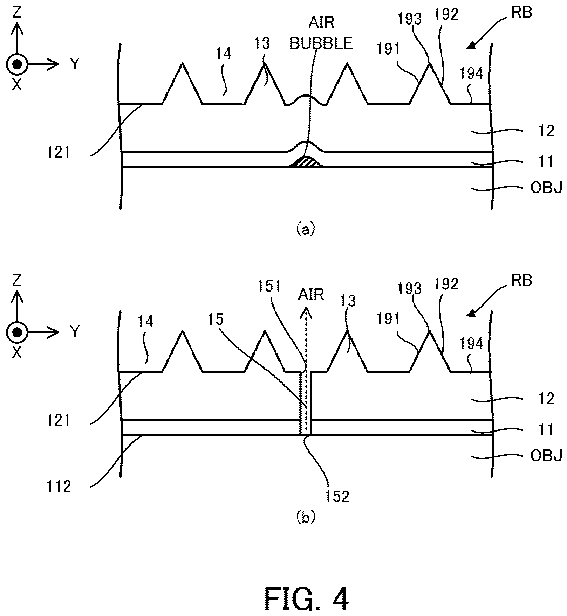

As described above, the riblet sheet 1 is attached to the object OBJ through the adhesive layer 11. In this case, there is a possibility that an air bubble remains between the riblet sheet 1 and the object OBJ depending on a method for attaching the riblet sheet 1. For example, as illustrated in FIG. 4(a) that is a cross-sectional view illustrating the object OBJ to which the riblet sheet 1 is attached, there is a possibility that a technical problem that the air bubble remains between the adhesive layer 11 of the riblet sheet 1 and the front surface of the object OBJ arises.

Note that an adhesive is usually applied between the riblet sheet 1 and the object OBJ in order to attach the riblet sheet 1 to the object OBJ even in a case where the riblet sheet 1 does not includes adhesive layer 11. Therefore, even in a case where the riblet sheet 1 does not includes the adhesive layer 11, there is a possibility that the air bubble remains between the riblet sheet 1 and the object OBJ depending on the method for attaching the riblet sheet 1 to the object OBJ and / or a method for applying the adhesive.

In a case where the air bubble remains in this manner, there is a possibility that the structural layer 12 is unintentionally deformed by the air bubble as illustrated in FIG. 4(a). Especially, there is a possibility that the front surface 121 of the structural layer 12 is unintentionally deformed by the air bubble. As a result, there is a possibility that an effect of the riblet structure RB for reducing the resistance (namely, an effect of reducing the resistance of the front surface of the movable body, to which the riblet sheet 1 is attached, to the fluid) is deteriorated due to the deformation of the front surface 121 of the structural layer 12. Furthermore, there is a possibility that an aesthetic appearance of the riblet sheet 1 is impaired due to the deformation of the front surface 121 of the structural layer 12. Furthermore, in a case where the air bubble remains, there is a possibility that an adhesion between the riblet sheet 1 and the object OBJ is deteriorated. As a result, there is a possibility that the riblet sheet 1 unintentionally peels off from the object OBJ.

In order to solve this technical problems, it is desirable that an work contractor, who attaches the riblet sheet 1 to the object OBJ, attaches the riblet sheet 1 to the object OBJ so that the air bubble does not remain. Namely, it is desirable that the work contractor attaches the riblet sheet 1 to the object OBJ little by little so that the air bubble does not remain. In some cases, it is desirable that the work contractor removes the air bubble by partially peeling off the riblet sheet 1, which has been already attached to the object OBJ, and then re-attach the riblet sheet 1 to the object OBJ, in a case where the air bubble remains in a process of attaching the riblet sheet 1 to the object OBJ. Alternatively, the same applies not only to a case where the work contractor manually attaches the riblet sheet 1 to the object OBJ, but also to a case where an apparatus for automatically attaching the riblet sheet 1 to the object OBJ is used. However, it is laborious and time-consuming to gradually attach the riblet sheet 1 to the object OBJ so that the air bubble does not remain.

Therefore, in the present example embodiment, in order to solve the technical problem that the air bubble remains, a through-hole 15 is formed in the riblet sheet 1 as illustrated in FIG. 4(a) that is a cross-sectional view illustrating the object OBJ to which the riblet sheet 1 is attached. The through-hole 15 penetrates the riblet sheet 1 along the thickness direction of the riblet sheet 1. Therefore, the through-hole 15 is formed between the front surface of the riblet sheet 1 (namely, the front surface 121 of the structural layer 12) and a back surface of the riblet sheet 1 (namely, the back surface 112 of the adhesive layer 11). Namely, the through-hole 15 is a through-hole reaching from the front surface of the riblet sheet 1 (namely, the front surface 121 of the structural layer 12) to the back surface of the riblet sheet 1 (namely, the back surface 112 of the adhesive layer 11). The through-hole 15 is a through-hole formed between the front surface of the riblet sheet 1 (namely, the front surface 121 of the structural layer 12) and the back surface of the riblet sheet 1 (namely, the back surface 112 of the adhesive layer 11).

In a case where the through-hole 15 penetrates the riblet sheet 1, an opening 151 of the through-hole 15 is formed on the front surface of the riblet sheet 1. Similarly, an opening 152 of the through-hole 15 is formed on the back surface of the riblet sheet 1.

In this case, even in a case where the air bubble remains between the riblet sheet 1 and the object OBJ, an air (alternatively, any fluid including any gas or liquid, the same applies in the below-described description) contained in the air bubble is removed from a space between the riblet sheet 1 and the object OBJ through the through-hole 15. Specifically, the air contained in the air bubble enters the through-hole 15 from the opening 152 and is then released to a space outside the riblet sheet 1 through the opening 151. Namely, the through-hole 15 serves as a gas release path for removing the air contained in the air bubble. In other words, the through-hole 15 serves as an air hole for removing the air contained in the air bubble. As a result, it is unlikely that the air bubble remains between the riblet sheet 1 and the object OBJ. Therefore, it is possible to reduce a workload for attaching the riblet sheet 1 to the object OBJ so that the air bubble does not remain. As a result, in the present example embodiment, the riblet structure RB can be easily formed on the front surface of the object OBJ. Furthermore, since it is unlikely that the air bubble remains, it is also unlikely that the structural layer 12 is unintentionally deformed by the air bubble. As a result, it is possible to prevent the effect of the riblet structure RB for reducing the resistance from being deteriorated, and it is possible to maintain the aesthetic appearance of the riblet sheet 1. Furthermore, since it is unlikely that the air bubble remains, it is also unlikely that the adhesion between the riblet sheet 1 and the object OBJ is deteriorated. As a result, it is unlikely that the riblet sheet 1 unintentionally peels off from the object OBJ.

The through-hole 15 may have any characteristic as long as it is usable as the gas release path for removing the air contained in the air bubble that remains between the riblet sheet 1 and the object OBJ. At least one of a position at which the through-hole 15 is formed, a position at which at least one of the openings 151 and 152 of the through-hole 15 is formed, a size of the through-hole 15, a size of at least one of the openings 151 and 152 of the through-hole 15, the number of the through-holes 15, the number of at least one of the openings 151 and 152 of the through-hole 15, a shape of the through-hole 15, and a shape of at least one of the openings 151 and 152 of the through-hole 15 is one example of the characteristic of the through-hole 15. Next, one example of the characteristic of the through-hole 15 will be further described.

### (3) Characteristic of Through-Hole 15

### (3-1) Position at which Opening 151 of Through-Hole 15 is Formed

First, the position at which the opening 151 of the through-hole 15, which is one example of the characteristic of through-hole 15, will be described.

### (3-1-1) First Specific Example of Position at which Opening 151 of Through-Hole 15 is Formed

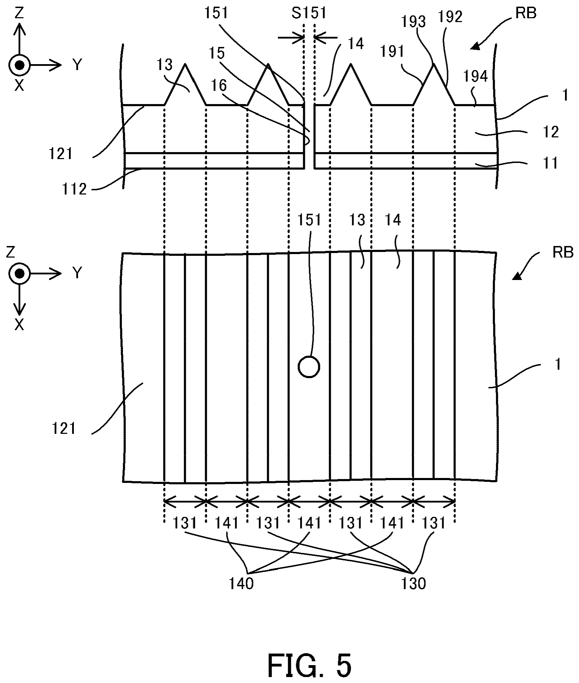

As illustrated in FIG. 5, in the first specific example, the opening 151 of the through-hole 15 may be formed in the groove area 140 in which the convex structure 13 is not formed. Specifically, the opening 151 of the through-hole 15 may be formed in at least one of the plurality of partial groove areas 141 included in the groove area 140. On the other hand, in the first specific example, the opening 151 of the through-hole 15 may not be formed in the convex area 130 at which the convex structure 13 is formed. Namely, the opening 151 of the through-hole 15 may not be formed in any of the plurality of partial convex areas 131 included in the convex area 130.

In the first specific example, the through-hole 15 does not affect the shape of the convex structure 13. Namely, the convex structure 13, whose shape is the same as the shape of the convex structure 13 formed in a case where the through-hole 15 is not formed, is formed in the riblet sheet 1 even in a case where the through-hole 15 is formed. Therefore, it is unlikely that the effect of the riblet structure RB for reducing the resistance deteriorates due to a change of the shape of the convex structure 13. As a result, the effect of the riblet structure RB for reducing the resistance is properly maintained. Furthermore, it is unlikely that a strength of the convex structure 13 decreases due to the change of the shape of the convex structure 13. As a result, the strength of the convex structure 13 is properly maintained.

In a case where the opening 151 of the through-hole 15 is formed in the partial groove area 141, a size (namely, a width) S151 of the opening 151 along at least one of the X-axis direction and the Y-axis direction may be smaller than the pitch P_rb of the convex structure 13. For example, in a case where the pitch P_rb of the convex structure 13 is 100 µm, the size S151 of the opening 151 along at least one of the X-axis direction and the Y-axis direction may be smaller than 100 µm. In this case, the through-holes 15, which satisfies a condition that the opening 151 is not formed in the convex area 130 and the opening 151 is formed in the groove area 140, can be formed properly.

Note that the opening 151 of the through-hole 15 may not be formed in the entire convex area 130 of the riblet sheet 1. In this case, the effect of the riblet structure RB for reducing the resistance and the strength of the convex structure 13 are maintained more properly. However, the opening 151 of the through-hole 15 may be formed in at least a part of the convex area 130 of the riblet sheet 1. For example, the opening 151 of the through-hole 15 may be formed on the side surface 191 of the convex structure 13. For example, the opening 151 of the through-hole 15 may be formed on the side surface 192 of the convex structure 13. For example, the opening 151 of the through-hole 15, which spans the corner part 193 and at least one of the side surfaces 191 and 192 of the convex structure 13, may be formed.

Alternatively, the opening 151 of the through-hole 15 may be formed in a first area part of the convex area 130 of the riblet sheet 1 and the opening 151 of the through-hole 15 may not be formed in a second area part, which is different from the first area part, of the convex area 130 of the riblet sheet 1. As one example, the opening 151 of the through-hole 15 may be formed in a first partial convex area 131 included in the convex area 130 of the riblet sheet 1 and the opening 151 of the through-hole 15 may not be formed in a second partial convex area 131 included in the convex area 130 of the riblet sheet 1. Namely, the opening 151 of the through-hole 15 may be formed in the convex area 130. In this case, the effect of the riblet structure RB for reducing the resistance and the strength of the convex structure 13 are properly maintained in the second area part of the convex area 130 of the riblet sheet 1.

### (3-1-2) Second Specific Example of Position at which Opening 151 of Through-Hole 15 is Formed

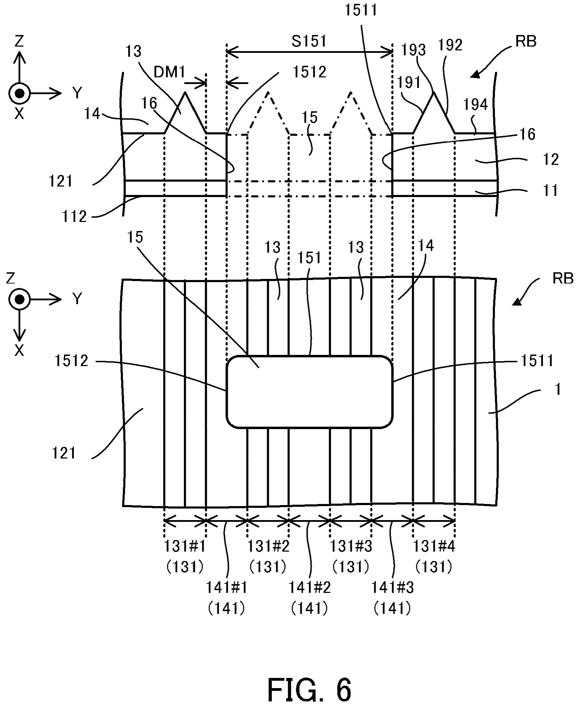

A second specific example is different from the first specific example described above, in which the opening 151 of the through-hole 15 is formed in a single partial groove area 141, in that the opening 151 of the through-hole 15 is formed to span a plurality of partial groove areas 141, as illustrated in FIG. 6. FIG. 6 illustrates an example in which the opening 151 is formed to span three partial groove areas 141 (specifically, the partial groove areas 141#1, 141#2, and 141#3).

In a case where the opening 151 of the through-hole 15 is formed to span the plurality of partial groove areas 141, the size (namely, the width) S151 of the opening 151 along at least one of the X-axis direction and the Y-axis direction may be larger than the pitch P_rb of the convex structure 13. For example, the size S151 of the opening 151 along at least one of the X-axis direction and the Y-axis direction may be twice the pitch P_rb of the convex structure 13, or may be larger than twice the pitch P_rb of the convex structure 13. For example, the size S151 of the opening 151 along at least one of the X-axis direction and the Y-axis direction may be three times the pitch P_rb of the convex structure 13, or may be larger than three times the pitch P_rb of the convex structure 13. For example, the size S151 of the opening 151 along at least one of the X-axis direction and the Y-axis direction may be four times the pitch P_rb of the convex structure 13, or may be larger than four times the pitch P_rb of the convex structure 13. For example, in a case where the pitch P_rb of the convex structure 13 is 100 µm, the size S151 of the opening 151 along at least one of the X-axis direction and the Y-axis direction may be larger than 100 µm, may be 200 µm, may be large than 200 µm, may be 300 µm, may be large than 300 µm, may be 400 µm, or may be larger than 400 µm. In this way, in the second specific example, the size of the opening 151 is larger than that in the first specific example. As a result, a difficulty of forming the through-hole 15 is reduced, and thereby it is easier to form the through-hole 15.

The opening 151 may be formed between two partial convex areas 131 sandwiching a plurality of partial groove areas 141 which the opening 151 is formed to span. In other words, the opening 151 may be formed between two convex structures 13 that are respectively formed in two partial convex areas 131 sandwiching the plurality of partial groove areas 141 which the opening 151 is formed to span. For example, in the example illustrated in FIG. 6, the three partial groove areas 141#1, 141#2, and 141#3, which the opening 151 is formed to span, are positioned between the partial convex areas 131#1 and 131#4. In this case, the opening 151 may be formed between the partial convex area 131#1 and the partial convex area 131#4. Namely, the opening 151 may be formed between the convex structure 13 formed in the partial convex area 131#1 and the convex structure 13 formed in the partial convex area 131#4. Note that a part of the convex structure 13 may be formed to surround the opening 151. A part of the convex structure 13 may be bent along a periphery of the opening 151.

In a case where then opening 151 is formed between two partial convex areas 131 (namely, between two convex structures 13), an end part of the opening 151 may be apart from the two convex structures 13 sandwiching the opening 151. Specifically, the end part of the opening 151 may be apart from the two convex structures 13, which sandwich the opening 151, by a predetermined first distance DM1 or more. Namely, a distance between the end part of the opening 151 and the two convex structures 13 sandwiching the opening 151 may be equal to or longer than the predetermined first distance DM1. Here, the distance between the end part of the opening 151 and the two convex structures 13 sandwiching the opening 151 may mean a distance to the end part of the opening 151 from a boundary between the groove structure 14 and at least one of the side surfaces 191 and 192 of the convex structure 13 (namely, a boundary between the boundary part 194 at least one of the side surfaces 191 and 192) to the end part of the opening 151. In this case, the predetermined first distance DM1 may be equal to a length of a short side (a distance along the Y-axis direction in FIG. 6) of at least one of the side surfaces 191 and 192 of the convex structure 13. Moreover, in this case, the predetermined first distance DM1 may be longer than the length of the short side of at least one of the side surfaces 191 and 192 of the convex structure 13. Moreover, the predetermined first distance DM1 may be from the corner part 193 (namely, the ridge line) of the convex structure 13 to the end part of the opening 151. Namely, the end part of the opening 151 may be positioned in the partial groove area 141. Note that the end part of the opening 151 in this paragraph means an end part of the opening 151 in the predetermined arrangement direction (the Y-axis direction in the example illustrated in FIG. 6) along which the plurality of convex structures 13 are arranged. In the example illustrated in FIG. 6, the end part of the opening 151 in this paragraph includes the end part 1511 of the opening 151 on the +Y side and the end part 1512 of the opening 151 on the -Y side.

In this way, in a case where the end part of the opening 151 is apart from the two convex structures 13 sandwiching the opening 151, the opening 151 does not affect the shape of the two convex structures 13 sandwiching the opening 151. Therefore, the number of convex structures 13, whose shapes are changed due to the opening 151, is not increased unnecessarily. As a result, the effect of the riblet structure RB for reducing the resistance is not unnecessarily deteriorated due to the change of the shape of the convex structures 13. As a result, the effect of the riblet structure RB for reducing the resistance is properly maintained. Furthermore, the strength of the convex structures 13 is not unnecessarily reduced due to the change of the shape of the convex structures 13. As a result, the strength of the convex structures 13 is properly maintained.

At least one of the plurality of partial groove areas 141 which the opening 151 is formed to span may not be connected along the extension direction of the convex structure 13. In other words, at least one of the plurality of partial groove areas 141 which the opening 151 is formed to span may be divided by the opening 151 (namely, by the through-hole 15). For example, in the example illustrated in FIG. 6, the partial groove area 142#2 of the partial groove areas 141#1, 141#2, and 141#3, which the opening 151 is formed to span, may be divided into two areas that sandwich the opening 151 along a direction (the X-axis direction in the example illustrated in FIG. 6) along which the convex structure 13 extends. Namely, the partial groove area 141#2 may be divided into a first area positioned on the +X side of the opening 151 and a second area positioned on the -X side of the opening 151 by the opening 151 (namely, by the through-hole 15).

Since the groove structure 14 is formed in the partial groove area 141, a division of the partial groove area 141 may be considered to be equivalent to a division of the groove structure 14. Namely, the groove structure 14, which is formed in at least one of the plural partial groove areas 141 which the opening 151 is formed to span, may not be connected along the extension direction of the convex structure 13. In other words, the groove structure 14, which is formed in at least one of the plural partial groove areas 141 which the opening 151 is formed to span, may be divided by the opening 151 (namely, by the through-hole 15). For example, in the example illustrated in FIG. 6, the groove structure 14, which is formed in the partial groove area 141#2, may be divided into first and second groove structures that sandwich the opening 151 along the direction (the X-axis direction in the example illustrated in FIG. 6) along which the convex structure 13 extends. Namely, the groove structure 14, which is formed in the partial groove area 141#2, may be divided into a first groove structure positioned on the +X side of the opening 151 and a second groove structure positioned on the -X side of the opening 151 by the opening 151 (namely, by the through-hole 15).

The partial convex area 131, which is positioned between the plurality of partial groove areas 141 which the opening 151 is formed to span, may not be connected along the extension direction of the convex structure 13. In other words, the partial convex area 131, which is positioned between the plurality of partial groove areas 141 which the opening 151 is formed to span, may be divided by the opening 151 (namely, by the through-hole 15). For example, in the example illustrated in FIG. 6, the partial convex areas 131#2 and 131#3 are positioned between the three partial groove areas 141#1, 141#2, and 141#3 which the opening 151 is formed to span. In this case, each of the partial convex areas 131#2 and 131#3 may be divided into two areas that sandwich the opening 151 along a direction (the X-axis direction in the example illustrated in FIG. 6) in which the convex structure 13 extends. Namely, each of the partial convex areas 131#2 and 131#3 may be divided into a first area positioned on the +X side of the opening 151 and a second area positioned on the -X side of the opening 151 by the opening 151 (namely, by the through-hole 15).

Since the convex structure 13 is formed in the partial convex area 131, a division of the partial convex area 131 may be considered to be equivalent to a division of the convex structure 13. Namely, the convex structure 13, which is formed in the partial convex area 131 positioned between the plurality of partial groove areas 141 which the opening 151 is formed to span, may not be connected along the extension direction of the convex structure 13. In other words, the convex structure 13, which is formed in the partial convex area 131 positioned between the plurality of partial groove areas 141 which the opening 151 is formed to span, may be divided by the opening 151 (namely, by the through-hole 15). For example, in the example illustrated in FIG. 6, the convex structures 13, which is formed in each of the partial convex areas 131#2 and 131#3, may be divided into first and second convex structures that sandwich the opening 151 along a direction (the X-axis direction in the example illustrated in FIG. 6) in which the convex structure 13 extends. Namely, the convex structures 13, which is formed in each of the partial convex areas 131#2 and 131#3, may be divided into a first convex structure positioned on the +X side of the opening 151 and a second convex structure positioned on the -X side of the opening 151 by the opening 151 (namely, by the through-hole 15).

However, as the number of convex structures 13 divided by the opening 151 increases, it is more likely that the effect of the riblet structure RB for reducing the resistance deteriorates. Therefore, the number of convex structures 13 divided by the opening 151 may be smaller than the number of convex structures 13 not divided by the opening 151. A size of an area of the convex area 130 in which the convex structure 13 is divided by the opening 151 may be smaller than a size of an area of the convex area 130 in which the convex structure 13 is not divided by the opening 151. As a result, it is possible to prevent an excessive deterioration of the effect of the riblet structure RB for reducing the resistance.

Typically, the number of convex structures 13 divided by the opening 151 may be equal to or smaller than the number satisfying a condition that a deterioration of the effect of reducing the resistance that is caused by the division of the convex structures 13 is small to be negligible. The size of the area of the convex area 130 in which the convex structure 13 is divided by the opening 151 may be smaller than a size satisfying a condition that a deterioration of the effect of reducing the resistance that is caused by the division of the convex structures 13 is small to be negligible. As a result, it is possible to prevent an excessive deterioration of the effect of the riblet structure RB for reducing the resistance more properly.

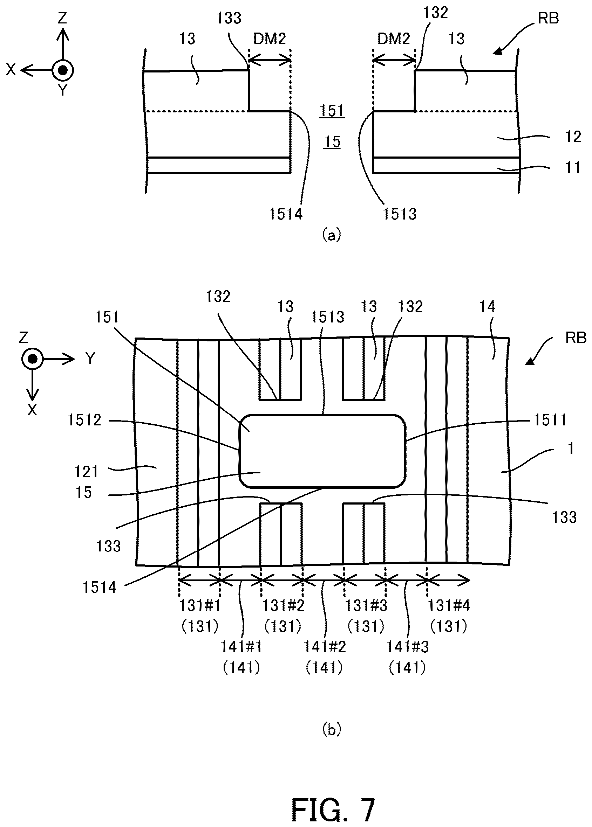

The convex structure 13 divided by the opening 151 may be apart from the opening 151. Specifically, as illustrated in FIG. 7(a) and FIG. 7(b), an end part of the convex structure 13 divided by the opening 151 may be apart from the end part of the opening 151 along the extension direction of the convex structure 13 by a predetermined second distance DM2 or more. For example, in the example illustrated in FIG. 7(a) and FIG. 7(b), an +X-side end part 132 of the convex structure 13 divided by the opening 151 may be apart from an -X-side end part 1513 of the opening 151 along the X-axis direction, which is the extension direction of the convex structure 13, by the second distance DM2 or more. For example, in the examples illustrated in FIG. 7(a) and FIG. 7(b), an -X-side end part 133 of the convex structure 13 divided by the opening 151 may be apart from an +X-side end part 1514 of the opening 151 along the X-axis direction, which is the extension direction of the convex structure 13, by the second distance DM2 or more.

Note that the convex structure 13 may be considered not to be formed in an area between the end part of the convex structure 13 and the end part of the opening 151. For example, the convex structure 13 may be considered not to be formed in an area between the +X-side end part 132 of the convex structure 13 and the -X-side end part 1513 of the opening 151. For example, the convex structure 13 may be considered not to be formed in an area between the -X-side end part 133 of the convex structure 13 and the +X-side end part 1514 of the opening 151. In this case, the area between the end part of the convex structure 13 and the end part of the opening 151 may be considered to be included in the groove area 140, because it is an area in which the convex structure 13 is not formed. Alternatively, the area between the end part of the convex structure 13 and the end part of the opening 151 may be considered to be included in the convex area 130, because it is an area in which the convex structure 13 should be formed.

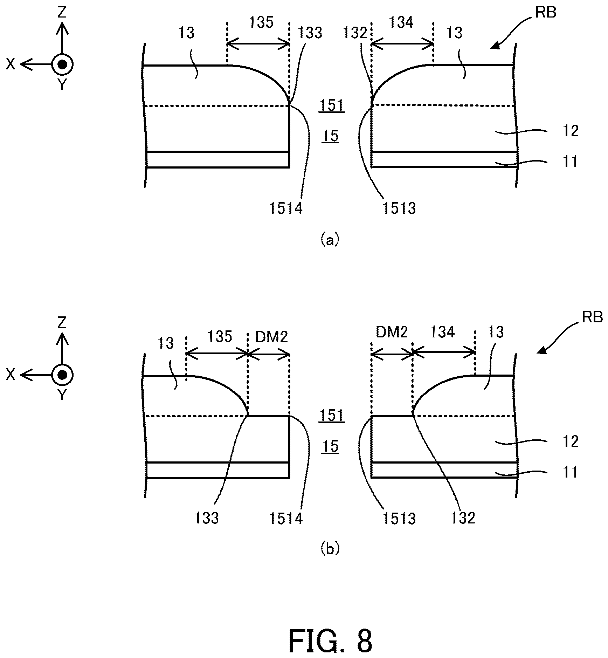

A height of an end structure part, which is a part of the convex structure 13 divided by the opening 151 and which includes the end part of the convex structure 13 along the extension direction, may gradually decrease as the end structure part is closer to the opening 151 along the extension direction of the convex structure 13. Specifically, as illustrated in FIG. 8(a) and FIG. 8(b), the convex structure 13 divided by the opening 151 may include an end structure part 134 including the end part 132 and an end structure part 135 including the end part 133. In this case, the height of the end structure part 134 may gradually decrease as the end structure part 134 is closer to the opening 151 (especially, the end part 1513 of the opening 151) along the X-axis direction that is the extension direction of the convex structure 13. Similarly, the height of the end structure part 135 may gradually decrease as the end structure part 135 is closer to the opening 151 (especially, the end part 1514 of the opening 151) along the X-axis direction that is the extension direction of the convex structure 13. Note that FIG. 8(a) illustrates an example in which the convex structure 13 divided by the opening 151 is not apart from the opening 151 by the predetermined second distance DM2 or more, and FIG. 8(b) illustrates an example in which the convex structure 13 divided by the opening 151 is apart from the opening 151 by the predetermined second distance DM2 or more.

### (3-2) Shape of Each of Openings 151 and 152 of Through-Hole 15

Next, the shape of each of the openings 151 and 152 of the through-hole 15, which is one example of the characteristic of the through-hole 15, will be described. Specifically, the shape of each of the openings 151 and 152 of the through-hole 15 on the front surface of the riblet sheet 1 (namely, on a surface along the XY plane) will be described. Note that the shape of the opening 151 is described for convenience of description in the below-described description. However, the below-described description may be used as a description about the shape of the opening 152 by replacing the term "opening 151" with the term "opening 152".

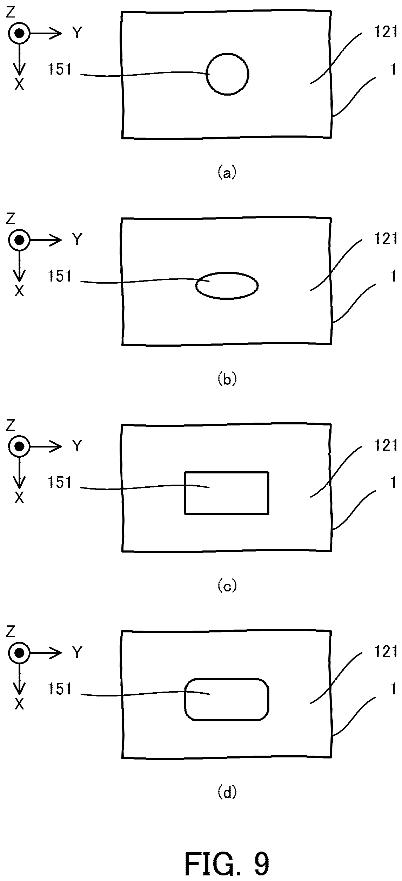

As illustrated in FIG. 9(a), the shape of the opening 151 may be a circular shape. As illustrated in FIG. 9(b), the shape of the opening 151 may be an elliptical shape. As illustrated in FIG. 9(c), the shape of the opening 151 may be a polygonal shape. As illustrated in FIG. 9(d), the shape of the opening 151 may be a shape enclosed by a closed curve such as a polygon whose vertex is rounded. The shape of the opening 151 may be any other shape.

### (3-3) Number of Through-Hole 15

Next, the number of the through-hole 15, which is one example of the characteristic of the through-hole 15, will be described.

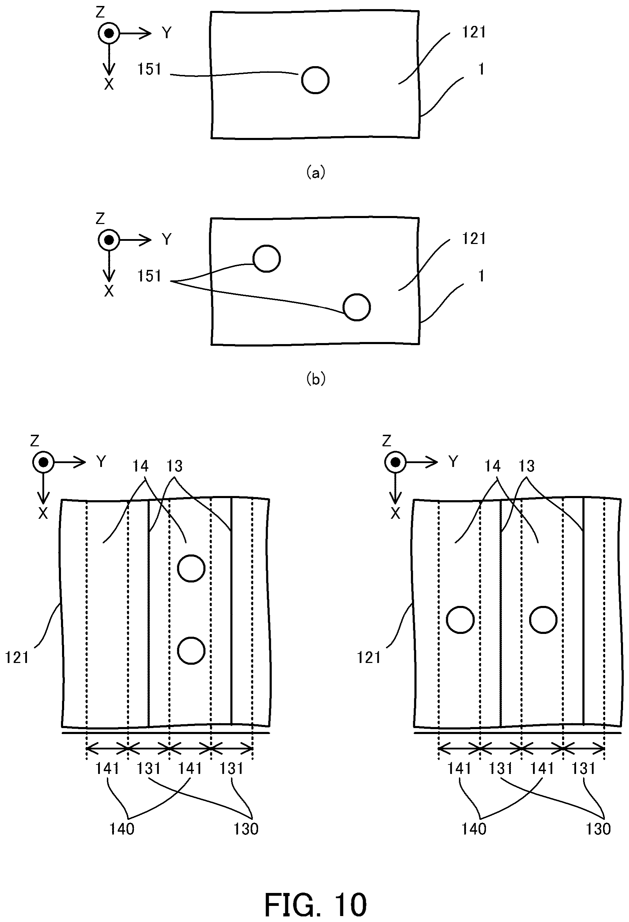

As illustrated in FIG. 10(a), a single through-hole 15 may be formed in the riblet sheet 1. In this case, as illustrated in FIG. 10(a), a single opening 151, which corresponds to the single through-hole 15, may be formed on the front surface of the riblet sheet 1 (namely, the front surface 121 of the structural layer 12). Furthermore, although it is not illustrated, a single opening 152, which corresponds to the single through-hole 15, may be formed on the back surface of the riblet sheet 1 (namely, the back surface 112 of the adhesive layer 11).

As illustrated in FIG. 10(b), a plurality of through-holes 15 may be formed in the riblet sheet 1. In this case, as illustrated in FIG. 10(b), a plurality of openings 151, which correspond to the plurality of through-holes 15, respectively, may be formed on the front surface of the riblet sheet 1 (namely, the front surface 121 of the structural layer 12). Furthermore, although it is not illustrated, a plurality of openings 152, which correspond to the plurality of through-holes 15, respectively, may be formed on the back surface of the riblet sheet 1 (namely, the back surface 112 of the adhesive layer 11).

In a case where the plurality of through-holes 15 are formed (namely, the plurality of openings 151 are formed), the plurality of openings 151, which correspond to the plurality of through-holes 15, respectively, may include at least two openings 151 (namely, a plurality of openings 151) formed in a single partial groove area 141, as illustrated in FIG.10(c). Namely, at least two through-holes 15 (namely, the plurality of through-holes 15) may be formed in the single partial groove area 141.

In a case where the plurality of through-holes 15 are formed (namely, the plurality of openings 151 are formed), the plurality of openings 151, which correspond to the plurality of through-holes 15, respectively, may include at least two openings 151 (namely, a plurality of openings 151) formed in at least two partial groove areas 141 (namely, a plurality of partial groove areas 141), respectively, as illustrated in FIG. 10(d). Namely, at least two through-holes 15 (namely, the plurality of through-holes 15) may be formed in at least two partial groove areas 141 (namely, the plurality of partial groove areas 141), respectively.

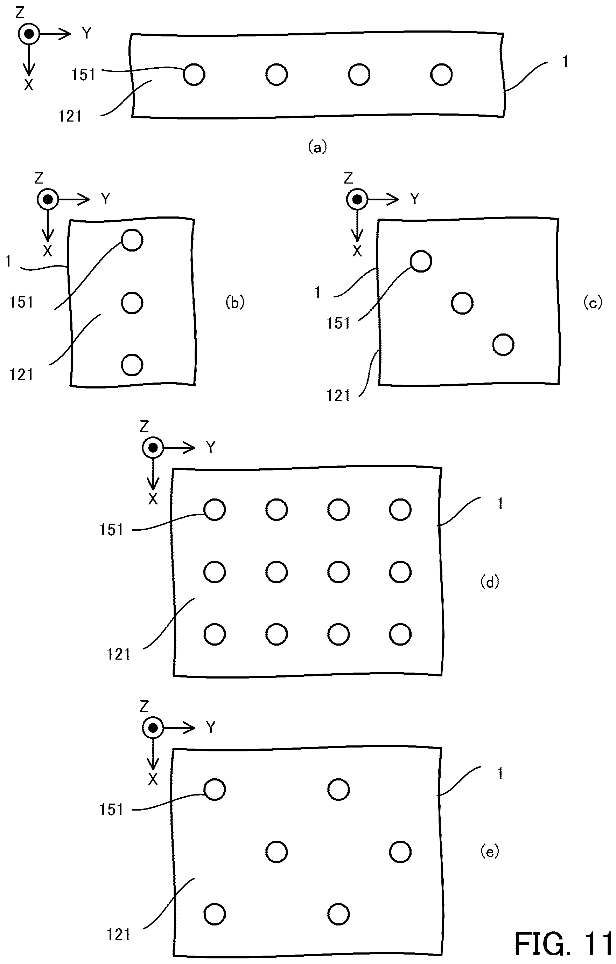

In a case where the plurality of through-holes 15 are formed (namely, the plurality of openings 151 are formed), the plurality of openings 151 may be distributed at equal intervals on the front surface of the riblet sheet 1. The plurality of openings 151 may include a plurality of openings 151 that are distributed at equal intervals on the front surface of the riblet sheet 1. For example, as illustrated in FIG. 11(a), the plurality of openings 151 may include a plurality of first openings 151 that are distributed at equal intervals along the X-axis direction. For example, as illustrated in FIG. 11(b), the plurality of openings 151 may include a plurality of second openings 151 that are distributed at equal intervals along the Y-axis direction. For example, as illustrated in FIG. 11(c), the plurality of openings 151 may include a plurality of third openings 151 that are distributed at equal intervals along any direction that is along the XY plane. For example, as illustrated in FIG. 11(d), the plurality of openings 151 may include a plurality of fourth openings 151 that are distributed at equal intervals along the X-axis direction and a plurality of fifth openings 151 that are distributed at equal intervals along the Y-axis direction. For example, as illustrated in FIG. 11(e), the plurality of openings 151 may include a plurality of sixth openings 151 that are distributed at equal intervals along any first direction that is along the XY plane and a plurality of seventh openings 151 that are distributed at equal intervals along any second direction that is along the XY plane and that is different from the first direction. The plurality of openings 152 may also be distributed at equal intervals on the back surface of the riblet sheet 1, although a detailed description thereof is omitted to avoid a redundant description.

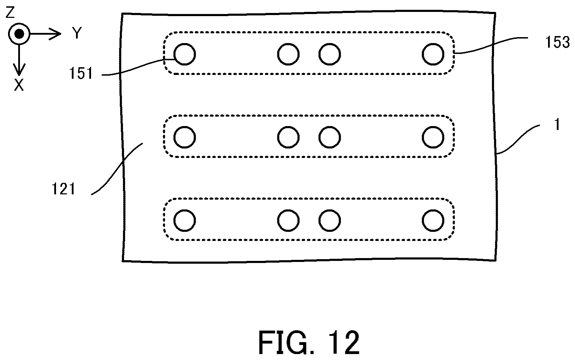

In a case where the plurality of through-holes 15 are formed (namely, the plurality of openings 151 are formed), the plurality of openings 151 may be distributed periodically on the front surface of the riblet sheet 1. The plurality of openings 151 may include a plurality of openings 151 that are distributed periodically on the front surface of the riblet sheet 1. Namely, a distribution pattern of the plurality of openings 151 on the front surface of the riblet sheet 1 may be a periodic distribution pattern. For example, as illustrated in FIG. 12, the plurality of openings 151 may be formed so that an unit opening group 153, which includes at least one opening 151, repeatedly appear on the front surface of the riblet sheet 1. The plurality of openings 152 may also be distributed periodically on the back surface of the riblet sheet 1, although a detailed description thereof is omitted to avoid a redundant description.

In a case where the plurality of through-holes 15 are formed (namely, the plurality of openings 151 are formed), the plurality of openings 151 may be distributed unevenly on the front surface of the riblet sheet 1. In this case, the plurality of openings 151 may be considered to be distributed non-periodically on the front surface of the riblet sheet 1. As one example, the plurality of openings 151 may be formed so that a distribution aspect of the plurality of openings 151 formed in a first partial area 1211 of the front surface of the riblet sheet 1 is different from a distribution aspect of the plurality of openings 151 formed in a second partial area 1212, which is different from the first partial area 1211, of the front surface of the riblet sheet 1. The plurality of openings 152 may be formed so that a distribution aspect of the plurality of openings 152 formed in a first partial area of the back surface of the riblet sheet 1 is different from a distribution aspect of the plurality of openings 152 formed in a second partial area, which is different from the first partial area, of the back surface of the riblet sheet 1, although a detailed description thereof is omitted to avoid a redundant description.

The first partial area 1211 and the second partial area 1212 may be areas determined based on a direction along which the riblet sheet 1 is attached to the object OBJ.

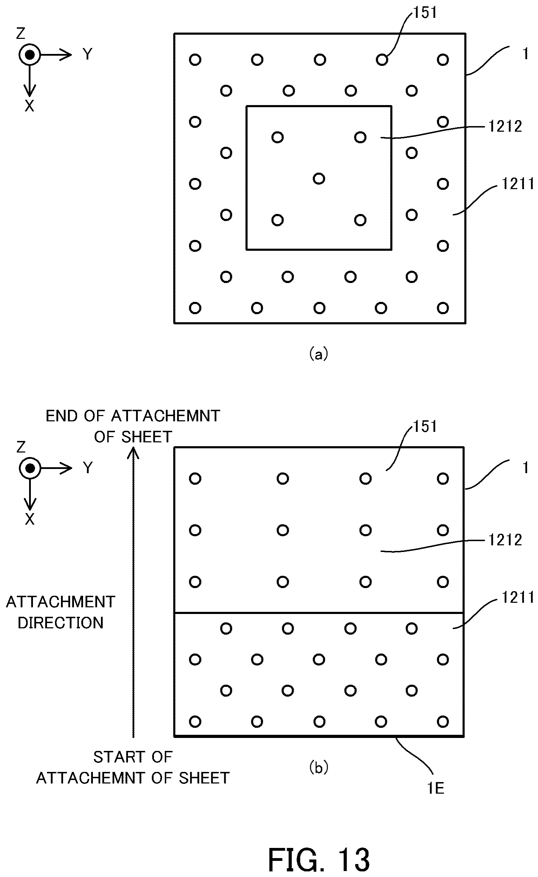

As one example, in a case where the riblet sheet 1 is attached to the object OBJ, the riblet sheet 1 is often attached to the object OBJ in order from an end part (in other words, an outer edge) of the riblet sheet 1. In this case, as illustrated in FIG. 13(a), the first partial area 1211 may be an area that is closer to the end part (the outer edge) of the riblet sheet 1 than the second partial area 1212 is. Here, a possibility of the air bubble being generated at the end part (the outer edge) of the riblet sheet 1, which is first attached to the object OBJ, is higher than a possibility of the air bubble being generated at a part of the riblet sheet 1, which is different from the end part (the outer edge) of the riblet sheet 1 and which is attached to the object OBJ after the end part (the outer edge) of the riblet sheet 1. Therefore, as illustrated in FIG. 13(a), in order to efficiently remove the bubble generated at the end part (the outer edge) of the riblet sheet 1, the number of openings 151 formed per unit area in the first partial area 1211 may be larger than the number of openings 151 formed per unit area in the second partial area 1212.

Note that the opening 151 may not be formed in the first partial area 1211 or the second partial area 1212. The opening 151 may be formed only in one partial area obtained by further dividing the first partial area 1211 or the second partial area 1212. The opening 151 may be formed in one partial area obtained by further dividing the first partial area 1211 or the second partial area 1212 and the opening 151 may not be formed in another partial area obtained by further dividing the first partial area 1211 or the second partial area 1212.

As another example, in a case where the riblet sheet 1 is attached to the object OBJ, one end part 1E of the riblet sheet 1 is often attached to the object OBJ first, and then the riblet sheet 1 is sequentially attached to the object OBJ along a predetermined attachment direction. In this case, as illustrated in FIG. 13(b), the first partial area 1211 may include the one end part 1E of the riblet sheet 1, which is first attached to the object OBJ, or include an area near the one end part 1E, and the second partial area 1212 may include an area that is apart from the one end part 1E along the attachment direction. Here, a possibility of the air bubble being generated near the one end part 1E of the riblet sheet 1, which is first attached to the object OBJ, is higher than a possibility of the air bubble being generated in a part of the riblet sheet 1, which is different from the one end part 1E and which is attached to the object OBJ after the one end part 1E of the riblet sheet 1. Therefore, as illustrated in FIG. 13(b), in order to efficiently remove the air bubble generated at the end part of the riblet sheet 1, the number of openings 151 formed per unit area in the first partial area 1211 may be larger than the number of openings 151 formed per unit area in the second partial area 1212.

However, the number of openings 151 formed per unit area in the first partial area 1211 may be smaller than the number of openings 151 formed per unit area in the second partial area 1212. In other words, the number of openings 151 formed per unit area in the second partial area 1212 may be larger than the number of openings 151 formed per unit area in the first partial area 1211. In this case, it is possible to efficiently remove the air bubble generated at the part of the riblet sheet 1, which is different from the one end part 1E and which is attached to the object OBJ after the one end part 1E of the riblet sheet 1. Moreover, since the first partial area 1211 has fewer openings 151, it may be possible to prevent the riblet sheet 1 from bending or deforming in attaching it to the object OBJ. The number of openings 151 formed per unit area in the first partial area 1211 may be the same as the number of openings 151 formed per unit area in the second partial area 1212. In this case, it is possible to efficiently remove the air bubble generated at each part of the riblet sheet 1.

### (3-4) Shape of Through-Hole 15

Next, the shape of the through-hole 15, which is one example of the characteristic of the through-hole 15, will be described. Especially, in the below-described description, a shape of a cross-section of the through-hole 15 along a direction (the Z-axis direction) along which the through-hole 15 penetrates the riblet sheet 1 will be described.

As illustrated in FIG. 5 and FIG. 6 described above, the shape of the cross-section of the through-hole 15 may be a shape satisfying a condition that an inner wall surface 16 of the through-hole 15 is a surface that is along (typically parallel to) a predetermined intersection direction that intersects the front surface of the riblet sheet 1. The predetermined intersection direction is the thickness direction of the riblet sheet 1 and may be the Z-axis direction. In this case, the shape of the cross-section of the through-hole 15 may be a surface satisfying a condition that the inner wall surface 16 of the through-hole 15 is a surface that is along (typically parallel to) the Z-axis direction. Note that the "inner wall surface 16 of the through-hole 15" in the present example embodiment means "an inner wall surface of the riblet sheet 1 facing the through-hole 15". Namely, the "inner wall surface 16 of the through-hole 15" in the present example embodiment means "an inner wall surface of at least one of the adhesive layer 11 and the structural layer 12 facing the through-hole 15".

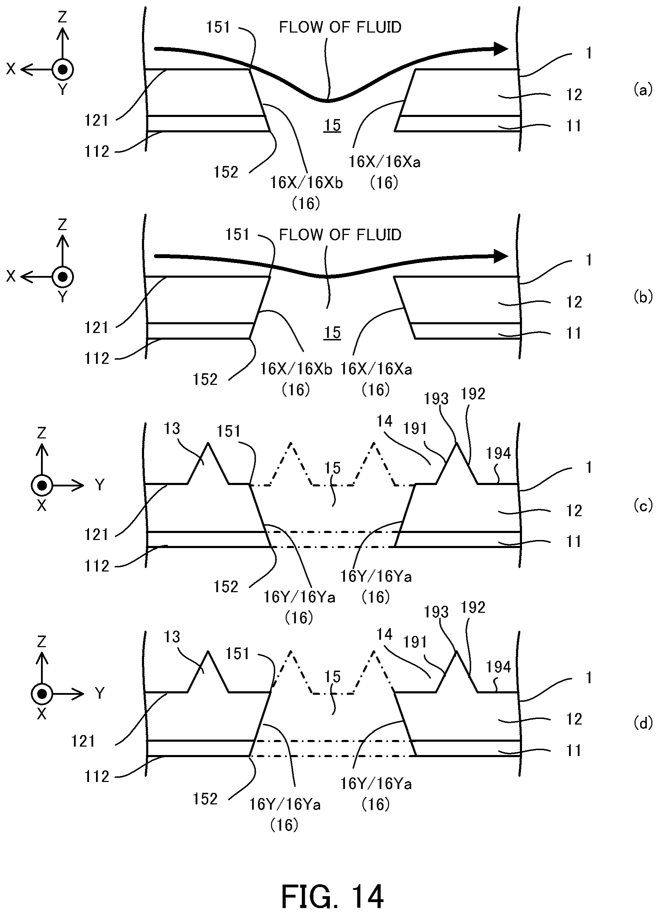

Alternatively, as illustrated in FIG. 14(a) to FIG. 14(d), the shape of the cross-section of the through-hole 15 may be a shape satisfying a condition that at least a part of the inner wall surface 16 of the through-hole 15 is inclined with respect to the predetermined intersection direction that intersects the front surface of the riblet sheet 1. Namely, the shape of the cross-section of the through-hole 15 may be a shape satisfying a condition that at least a part of the inner wall surface 16 of the through-hole 15 is inclined with respect to the predetermined intersection direction from the front surface of the riblet sheet 1 (namely, the front surface 121 of the structural layer 12) toward the back surface of the riblet sheet 1 (namely, the back surface 112 of the adhesive layer 11). Especially, the shape of the cross-section of the through-hole 15 may be a shape satisfying a condition that at least a part of the inner wall surface 16 of the through-hole 15 is gradually inclined with respect to the predetermined intersection direction from the front surface of the riblet sheet 1 toward the back surface of the riblet sheet 1. The shape of the cross-section of the through-hole 15 may be a shape satisfying a condition that at least a part of the inner wall surface 16 of the through-hole 15 is inclined with respect to the Z-axis direction. Namely, the shape of the cross-section of the through-hole 15 may be a tapered shape.

As a first example, as illustrated in FIG. 14(a), a pair of inner wall surface parts 16X of the inner wall surface 16 of the through-hole 15 may be inclined in the predetermined intersection direction (the Z-axis direction). The pair of inner wall surface parts 16X are surfaces facing each other along the X-axis direction, which is the extension direction of the convex structure 13. Note that the fluid usually flows along the convex structure 13 (namely, along the extension direction of the convex structure 13) in a case where a fluid reduction effect of the riblet structure RB is achieved, and therefore, the pair of inner wall surface parts 16X may be considered to face each other along a flow direction of the fluid (namely, a direction of a streamline) on the front surface of the riblet sheet 1. Especially, as illustrated in FIG. 14(a), the pair of inner wall surface parts 16X may be inclined with respect to the predetermined intersection direction (the Z-axis direction) so that the size of the through-holes 15 decreases in a continuous manner (alternatively, in a stepwise manner) from the front surface of the riblet sheet 1 toward the back surface of the riblet sheet 1. Specifically, the pair of inner wall surface parts 16X may be inclined with respect to the predetermined intersection direction (the Z-axis direction) so that the size of the through-holes 15 along the extension direction of the convex structure 13 decreases in a continuous manner (alternatively, in a stepwise manner) from the front surface of the riblet sheet 1 toward the back surface of the riblet sheet 1. In other words, as illustrated in FIG. 14(a), the pair of inner wall surface parts 16X may be inclined with respect to the predetermined intersection direction (the Z-axis direction) so that the size of the opening 151 formed on the front surface of the riblet sheet 1 is larger than the size of the opening 152 formed on the back surface of the riblet sheet 1. Specifically, the pair of inner wall surface parts 16X may be inclined with respect to the predetermined intersection direction (the Z-axis direction) so that the size of the opening 151 along the extension direction of the convex structure 13 is larger than the size of the opening 152 along the extension direction of the convex structure 13.

In this first example, as illustrated in FIG. 14(a), it is less likely that the inner wall surface part 16X of the through-hole 15 (especially, an inner wall surface part 16Xa positioned on a downstream side of the flow of the fluid) serves as a wall that blocks the flow of the fluid along the convex structure 13, compared to the example illustrated in FIG. 5 and FIG. 6. Therefore, it is less likely that the flow of the fluid along the convex structure 13 is blocked. As a result, it is possible to prevent a deterioration of the effect of the riblet structure RB for reducing the resistance.

As a second example, as illustrated in FIG. 14(b), the pair of inner wall surface parts 16X may be inclined with respect to the predetermined intersection direction (the Z-axis direction) so that the size of the through-holes 15 increases in a continuous manner (alternatively, in a stepwise manner) from the front surface of the riblet sheet 1 toward the back surface of the riblet sheet 1. Specifically, the pair of inner wall surface parts 16X may be inclined with respect to the predetermined intersection direction (the Z-axis direction) so that the size of the through-holes 15 along the extension direction of the convex structure 13 increases in a continuous manner (alternatively, in a stepwise manner) from the front surface of the riblet sheet 1 toward the back surface of the riblet sheet 1. In other words, as illustrated in FIG. 14(b), the pair of inner wall surface parts 16X may be inclined with respect to the predetermined intersection direction (the Z-axis direction) so that the size of the opening 151 formed on the front surface of the riblet sheet 1 is smaller than the size of the opening 152 formed on the back surface of the riblet sheet 1. Specifically, the pair of inner wall surface parts 16X may be inclined with respect to the predetermined intersection direction (the Z-axis direction) so that the size of the opening 151 along the extension direction of the convex structure 13 is smaller than the size of the opening 152 along the extension direction of the convex structure 13.

In this second example, as illustrated in FIG. 14(b), it is less likely that the fluid flowing along the convex structure 13 entering an interior of the through-hole 15, compared to the example illustrated in FIG. 5 and FIG. 6. This is because the size of the opening 151, which serves as a port through which the fluid flows into the through-hole 15, is relatively small. Therefore, it is less likely that the flow of the fluid along the convex structure 13 is blocked by the through-hole 15 (especially, by the inner wall surface part 16X) . As a result, it is possible to prevent a deterioration of the effect of the riblet structure RB for reducing the resistance. Furthermore, since the size of the opening 152 facing the air bubble is relatively large, it is easier to remove the air contained in the air bubble.

As a third example, as illustrated in FIG. 14(c), a pair of inner wall surface parts 16Y of the inner wall surface 16 of the through-holes 15 may be inclined with respect to the predetermined intersection direction (the Z-axis direction). The pair of inner wall surface parts 16Y are surfaces facing each other along the Y-axis direction, which is the arrangement direction of the convex structures 13. Note that the fluid usually flows along the convex structure 13 (namely, along the extension direction of the convex structure 13) in a case where the fluid reduction effect of the riblet structure RB is achieved, and therefore, the pair of inner wall surface parts 16Y may be considered to face each other along a direction that intersects the flow direction of the fluid (namely, the direction of the streamline) on the front surface of the riblet sheet 1. Especially, as illustrated in FIG. 14(c), the pair of inner wall surface parts 16Y may be inclined with respect to the predetermined intersection direction (the Z-axis direction) so that the size of the through-holes 15 decreases in a continuous manner (alternatively, in a stepwise manner) from the front surface of the riblet sheet 1 toward the back surface of the riblet sheet 1. Specifically, the pair of inner wall surface parts 16Y may be inclined with respect to the predetermined intersection direction (the Z-axis direction) so that the size of the through-holes 15 along the arrangement direction of the convex structures 13 decreases in a continuous manner (alternatively, in a stepwise manner) from the front surface of the riblet sheet 1 toward the back surface of the riblet sheet 1. In other words, as illustrated in FIG. 14(c), the pair of inner wall surface parts 16Y may be inclined with respect to the predetermined intersection direction (the Z-axis direction) so that the size of the opening 151 formed on the front surface of the riblet sheet 1 is larger than the size of the opening 152 formed on the back surface of the riblet sheet 1. Specifically, the pair of inner wall surface parts 16Y may be inclined with respect to the predetermined intersection direction (the Z-axis direction) so that the size of the opening 151 along the arrangement direction of the convex structures 13 is larger than the size of the opening 152 along the arrangement direction of the convex structures 13.

In this third example, as illustrated in FIG. 14(c), it is less likely that the inner wall surface part 16Y of the through-hole 15 serves as a wall that blocks the flow of the fluid along the convex structure 13, compared to the example illustrated in FIG. 5 and FIG. 6. Therefore, it is less likely that the flow of the fluid along the convex structure 13 is blocked. As a result, it is possible to prevent a deterioration of the effect of the riblet structure RB for reducing the resistance.

As a fourth example, as illustrated in FIG. 14(d), the pair of inner wall surface parts 16Y may be inclined with respect to the predetermined intersection direction (the Z-axis direction) so that the size of the through-holes 15 increases in a continuous manner (alternatively, in a stepwise manner) from the front surface of the riblet sheet 1 toward the back surface of the riblet sheet 1. Specifically, the pair of inner wall surface parts 16Y may be inclined with respect to the predetermined intersection direction (the Z-axis direction) so that the size of the through-holes 15 along the arrangement direction of the convex structures 13 increases in a continuous manner (alternatively, in a stepwise manner) from the front surface of the riblet sheet 1 toward the back surface of the riblet sheet 1. In other words, as illustrated in FIG. 14(d), the pair of inner wall surface parts 16Y may be inclined with respect to the predetermined intersection direction (the Z-axis direction) so that the size of the opening 151 formed on the front surface of the riblet sheet 1 is smaller than the size of the opening 152 formed on the back surface of the riblet sheet 1. Specifically, the pair of inner wall surface parts 16Y may be inclined with respect to the predetermined intersection direction (the Z-axis direction) so that the size of the opening 151 along the arrangement direction of the convex structures 13 is smaller than the size of the opening 152 along the arrangement direction of the convex structures 13.

In this second example, as illustrated in FIG. 14(d), it is less likely that the fluid flowing along the convex structure 13 entering an interior of the through-hole 15, compared to the example illustrated in FIG. 5 and FIG. 6. This is because the size of the opening 151, which serves as a port through which the fluid flows into the through-hole 15, is relatively small. Therefore, it is less likely that the flow of the fluid along the convex structure 13 is blocked by the through-hole 15 (especially, by the inner wall surface part 16X) . As a result, it is possible to prevent a deterioration of the effect of the riblet structure RB for reducing the resistance. Furthermore, since the size of the opening 152 facing the air bubble is relatively large, it is easier to remove the air contained in the air bubble.

Note that the size of the opening 151 may be smaller than a width (namely, a size along the X-axis direction) of a single convex structure 13, and the size of the opening 152 may be larger than the width (namely, the size along the X-axis direction) of a single convex structure 13 in the second example illustrated in FIG. 14(b) and the fourth example illustrated in FIG. 14(d). However, the size of the opening 151 may be larger than the width (namely, the size along the X-axis direction) of a single convex structure 13, and the size of the opening 152 may be smaller than the width (namely, the size along the X-axis direction) of a single convex structure 13 in the second example illustrated in FIG. 14(b) and the fourth example illustrated in FIG. 14(d).

Moreover, the size of the opening 151 may be larger than the width (namely, the size along the X-axis direction) of a single convex structure 13, and the size of the opening 152 may be smaller than the width (namely, the size along the X-axis direction) of a single convex structure 13 in the first example illustrated in FIG. 14(a) and the third example illustrated in FIG. 14(c). However, the size of the opening 151 may be smaller than the width (namely, the size along the X-axis direction) of a single convex structure 13, and the size of the opening 152 may be larger than the width (namely, the size along the X-axis direction) of a single convex structure 13 in the first example illustrated in FIG. 14(a) and the third example illustrated in FIG. 14(c).

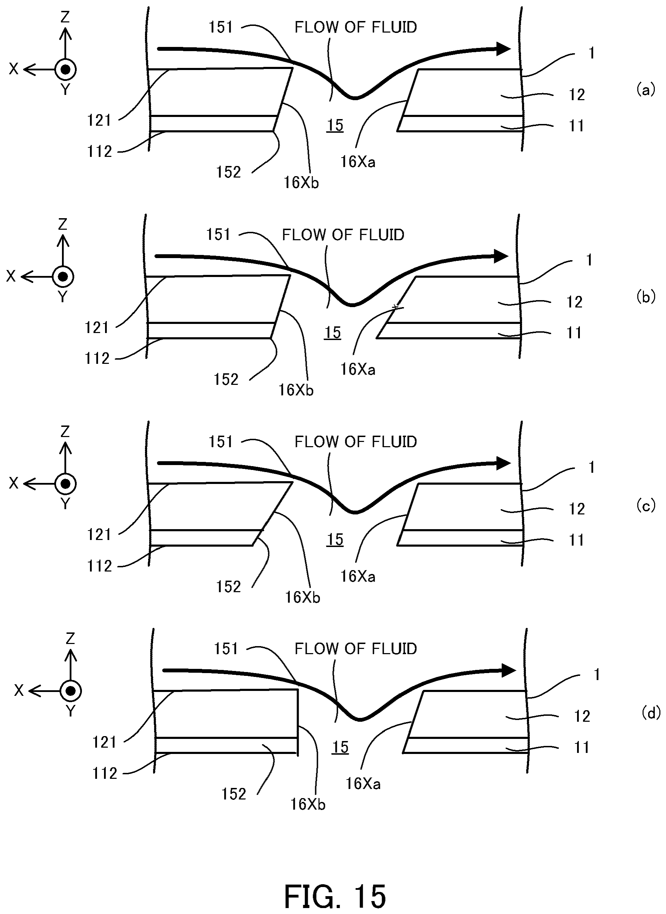

Moreover, in the example illustrated in FIG. 14(a) to FIG. 14(b), inclination directions of the pair of inner wall surface parts 16X with respect to an axis, which is along the Z-axis, is different from each other. Specifically, in the first example illustrated in FIG. 14(a), the inner wall surface part 16Xa of the pair of inner wall surface parts 16X positioned on the downstream side of the flow of the fluid is inclined toward the -X side with respect to the axis along the Z-axis, and an inner wall surface part 16Xb of the pair of inner wall surface parts 16X positioned on an upstream side of the flow of the fluid is inclined toward the +X side with respect to the axis along the Z-axis. In the second example illustrated in FIG. 14(b), the inner wall surface part 16Xa of the pair of inner wall surface parts 16X positioned on the downstream side of the flow of the fluid is inclined toward the +X side with respect to the axis along the Z-axis, and an inner wall surface part 16Xb of the pair of inner wall surface parts 16X positioned on an upstream side of the flow of the fluid is inclined toward the -X side with respect to the axis along the Z-axis. However, the inclination directions of the pair of inner wall surface parts 16X with respect to an axis, which is along the Z-axis, may be the same as each other. For example, as illustrated in FIG. 15(a) to FIG. 15(c), the pair of inner wall surface parts 16X (namely, the inner wall surface parts 16Xa and 16Xb) may be inclined toward the downstream side of the flow of the fluid (the -X side in the example illustrated in FIG. 15(a)) with respect to the axis along the Z-axis. Note that FIG. 15(a) illustrates an example in which an amount of the inclination of the inner wall surface part 16Xa with respect to the axis along the Z-axis is the same as an amount of the inclination of the inner wall surface part 16Xb with respect to the axis along the Z-axis, FIG. 15(b) illustrates an example in which the amount of the inclination of the inner wall surface part 16Xa with respect to the axis along the Z-axis is larger than the amount of the inclination of the inner wall surface part 16Xb with respect to the axis along the Z-axis, and FIG. 15(c) illustrates an example in which the amount of the inclination of the inner wall surface part 16Xa with respect to the axis along the Z-axis is smaller than the amount of the inclination of the inner wall surface part 16Xb with respect to the axis along the Z-axis. Even in this case, it is less likely that the inner wall surface part 16X of the through-hole 15 (especially, the inner wall surface part 16Xa positioned on the downstream side of the flow of the fluid) serves as the wall that blocks the flow of the fluid along the convex structure 13. Therefore, it is less likely that the flow of the fluid along the convex structure 13 is blocked. As a result, it is possible to prevent a deterioration of the effect of the riblet structure RB for reducing the resistance.

Note that the amount of the inclination of the inner wall surface part 16Xa with respect to the axis along the Z-axis may be the same as or may be different from the amount of the inclination of the inner wall surface part 16Xb with respect to the axis along the Z-axis even in a case where the inclination directions of the pair of the inner wall surface parts 16X with respect to the axis along the Z-axis are different from each other. In a case where the amount of the inclination of the inner wall surface part 16Xa is different from the amount of the inclination of the inner wall surface part 16Xb, the amount of the inclination of the inner wall surface part 16Xa and the amount of the inclination of the inner wall surface part 16Xb may be set so that the opening 152 is smaller than the opening 151 (namely, the opening 152 is minimal). As a result, it is possible to reduce the possibility that the inner wall surface part 16X of the through-hole 15 (especially, the inner wall surface part 16Xa positioned on the downstream side of the flow of the fluid) serves as the wall that blocks the flow of the fluid along the convex structure 13 while minimizing the opening 152 formed in the adhesive layer 11. Alternatively, in a case where the amount of the inclination of the inner wall surface part 16Xa is different from the amount of the inclination of the inner wall surface part 16Xb, the amount of the inclination of the inner wall surface part 16Xa and the amount of the inclination of the inner wall surface part 16Xb may be set so that the opening 151 is smaller than the opening 152 (namely, the opening 151 is minimal). As a result, it is possible to reduce the possibility that the fluid flows into the through-hole 15.

Alternatively, one of the pair of inner wall surface parts 16X may be inclined with respect to the axis along the Z-axis, and the other one of the pair of inner wall surface parts 16X may not be inclined with respect to the axis along the Z-axis. For example, as illustrated in FIG. 15(d), the inner wall surface part 16Xa positioned on the downstream side of the flow of the fluid may be inclined toward the downstream side of the flow of the fluid (the -X side in the example illustrated in FIG. 15(a)), and the inner wall surface part 16Xb positioned on the upstream side of the flow of the fluid may not be inclined (namely, may be a surface along the Z-axis). Even in this case, it is less likely that the inner wall surface part 16X of the through-hole 15 (especially, the inner wall surface part 16Xa positioned on the downstream side of the flow of the fluid) serves as the wall that blocks the flow of the fluid along the convex structure 13. Therefore, it is less likely that the flow of the fluid along the convex structure 13 is blocked. As a result, it is possible to prevent a deterioration of the effect of the riblet structure RB for reducing the resistance.

Similarly, in the example illustrated in FIG. 14(c) to FIG. 14(d), inclination directions of the pair of inner wall surface parts 16Y with respect to an axis, which is along the Z-axis, is different from each other. Specifically, in the third example illustrated in FIG. 14(c), an inner wall surface part 16Ya of the pair of inner wall surface parts 16X positioned on the +Y side is inclined toward the +Y side with respect to the axis along the Z-axis, and an inner wall surface part 16Yb of the pair of inner wall surface parts 16X positioned on the -Y side is inclined toward the -Y side with respect to the axis along the Z-axis. In the fourth example illustrated in FIG. 14(d), the inner wall surface part 16Ya of the pair of inner wall surface parts 16X positioned on the +Y side is inclined toward the -Y side with respect to the axis along the Z-axis, and the inner wall surface part 16Yb of the pair of inner wall surface parts 16X positioned on the -Y side is inclined toward the +Y side with respect to the axis along the Z-axis. However, the inclination directions of the pair of inner wall surface parts 16Y with respect to an axis, which is along the Z-axis, may be the same as each other. For example, the pair of inner wall surface parts 16Y (namely, the inner wall surface parts 16Ya and 16Yb) may be inclined in the same direction with respect to the axis along the Z-axis. In this case, an amount of the inclination of the inner wall surface part 16Ya with respect to the axis along the Z-axis may be the same as an amount of the inclination of the inner wall surface part 16Yb with respect to the axis along the Z-axis. The amount of the inclination of the inner wall surface part 16Ya with respect to the axis parallel to the Z-axis may be larger than the amount of the inclination of the inner wall surface part 16Yb with respect to the axis parallel to the Z-axis. The amount of the inclination of the inner wall surface part 16Ya with respect to the axis parallel to the Z-axis may be smaller than the amount of the inclination of the inner wall surface part 16Yb with respect to the axis parallel to the Z-axis.

Note that the amount of the inclination of the inner wall surface part 16Ya with respect to the axis along the Z-axis may be the same as or may be different from the amount of the inclination of the inner wall surface part 16Yb with respect to the axis along the Z-axis even in a case where the inclination directions of the pair of the inner wall surface parts 16Y with respect to the axis along the Z-axis are different from each other. In a case where the amount of the inclination of the inner wall surface part 16Ya is different from the amount of the inclination of the inner wall surface part 16Yb, the amount of the inclination of the inner wall surface part 16Ya and the amount of the inclination of the inner wall surface part 16Yb may be set so that the opening 152 is smaller than the opening 151 (namely, the opening 152 is minimal). As a result, it is possible to reduce the possibility that the inner wall surface part 16Y of the through-hole 15 serves as the wall that blocks the flow of the fluid along the convex structure 13 while minimizing the opening 152 formed in the adhesive layer 11. Alternatively, in a case where the amount of the inclination of the inner wall surface part 16Ya is different from the amount of the inclination of the inner wall surface part 16Yb, the amount of the inclination of the inner wall surface part 16Ya and the amount of the inclination of the inner wall surface part 16Yb may be set so that the opening 151 is smaller than the opening 152 (namely, the opening 151 is minimal). As a result, it is possible to reduce the possibility that the fluid flows into the through-hole 15.

Alternatively, one of the pair of inner wall surface parts 16Y may be inclined with respect to the axis along the Z-axis, and the other one of the pair of inner wall surface parts 16Y may not be inclined with respect to the axis along the Z-axis.

Note that all of the through-holes 15 may satisfy a condition that the size of the opening 151 is larger than the size of the opening 152 in a case where the plurality of through-holes 15 are formed in the first example illustrated in FIG. 14(a) and the third example illustrated in FIG. 14(c). Alternatively, at least one of the plurality of through-holes 15 may satisfy the condition that the size of the opening 151 is larger than the size of the opening 152, and at least other one of the plurality of through-holes 15 may not satisfy the condition that the size of the opening 151 is larger than the size of the opening 152.

Note that all of the through-holes 15 may satisfy a condition that the size of the opening 151 is smaller than the size of the opening 152 in a case where the plurality of through-holes 15 are formed in the second example illustrated in FIG. 14(b) and the fourth example illustrated in FIG. 14(d). Alternatively, at least one of the plurality of through-holes 15 may satisfy the condition that the size of the opening 151 is smaller than the size of the opening 152, and at least other one of the plurality of through-holes 15 may not satisfy the condition that the size of the opening 151 is smaller than the size of the opening 152.

Note that the plurality of through-holes 15 may include at least two through-holes 15 whose shapes are different from each other in a case where the plurality of through-holes 15 are formed in a single riblet sheet 1. For example, the plurality of through-holes 15 may include at least one of the through-hole 15 illustrated in FIG. 5, the through-hole 15 illustrated in FIG. 6, the through-hole 15 illustrated in FIG. 14(a), the through-hole 15 illustrated in FIG. 14(b), the through-hole 15 illustrated in FIG. 14(c),the through-hole 15 illustrated in FIG. 14(d), the through-hole 15 illustrated in FIG. 15(a), the through-hole 15 illustrated in FIG. 15(b), the through-hole 15 illustrated in FIG. 15(c), and the through-hole 15 illustrated in FIG. 15(d).

### (4) Manufacturing Method of Riblet Sheet 1

The riblet sheet 1 may be manufactured by using a processing apparatus that is configured to perform a subtractive manufacturing. For example, the processing apparatus may perform the subtractive manufacturing for removing a part of the riblet sheet 1 (specifically, a part of the structural layer 12) by irradiating processing light onto the riblet sheet 1 on which the riblet structure RB has not yet been formed. In this case, the processing apparatus may perform the subtractive manufacturing for removing a part of the riblet sheet 1 (typically, a part of the structural layer 12) so that the riblet structure RB is formed on the front surface of the riblet sheet 1 (specifically, the front surface 121 of the structural layer 12). In this case, the processing apparatus may be considered to serve as a manufacturing apparatus for manufacturing the riblet sheet 1.

Alternatively, the riblet sheet 1 may be manufactured by imprint lithography using a mold. Namely, the riblet sheet 1 may be manufactured by an imprint lithography apparatus that performs the imprint lithography using the mold. A mold structure whose shape is complementary to the riblet structure RB is formed in the mold used for the imprint lithography has. In this case, the mold structure formed in the mold may be pressed against the riblet sheet 1 (specifically, the structural layer 12) on which the riblet structure RB has not been formed, so that the riblet structure RB corresponding to the mold structure is transferred to the riblet sheet 1. As a result, the riblet structure RB may be formed on the front surface of the riblet sheet 1. In this case, the imprint lithography apparatus may be considered to serves as a manufacturing apparatus for manufacturing the riblet sheet 1. Alternatively, a light curing resin may be coated on a material sheet 100, and a mold 3a may be pressed against the coated light curing resin while light for curing is irradiated onto the light curing resin layer to form the riblet structure RB. Note that at least one of a rotating roller and spindle may be used as the mold. In this case, not only a groove shape for transferring the riblet structure RB but also a projection shape for processing the through-hole 15 may be formed at predetermined intervals on a rotating body including at least one of the roller and the spindle.

Alternatively, the riblet sheet 1 may be manufactured by any other method.

In a case where the through-hole 15 is formed in the riblet sheet 1, the through-hole 15 may be formed after the riblet structure RB is formed. For example, in a case where a process for forming the riblet structure RB on a sheet by a riblet processing device (a molding, a light processing, a machining, and the like) that is configured to form a riblet is performed and then a process for forming the through-hole 15 in the sheet by a device, which is configured to form a hole, such as a molding, a light processing, or a machining that is the same as or different from the riblet processing device is performed it can be said that the through-hole 15 is formed after the riblet structure RB is formed. In a case where the through-hole 15 that divides the convex structure 13 is formed as described above, the riblet structure RB including a series of convex structure 13 that is not divided by the through-hole 15 may be formed, and then the through-hole 15 that divides the convex structure 13 may be formed. Namely, the riblet structure RB including a series of convex structure 13 that is not divided by the through-hole 15 may be formed, and then the convex structure 13 may be divided. Note that this manufacturing method has an advantage that the through-hole 15 can be formed without affecting the shape of the convex structure 13, which has been already formed, in a case where the convex structure 13 is formed at a position that is apart from the opening 151 as described above. Namely, there is an advantage that the through-hole 15 can be formed without damaging (alternatively, breaking) the convex structure 13 that has been already formed. Note that it is unlikely that the through-hole 15 is filled with the light curing resin by forming the through-hole 15 after forming the riblet structure RB in the case where the riblet structure RB is formed by the light curing resin as described above.

Alternatively, in the case where the through-hole 15 is formed in the riblet sheet 1, the riblet structure RB and the through-hole 15 may be formed simultaneously. For example, in a case where a process for forming the riblet structure RB and the through-hole 15 in the sheet at one time by pressing the mold, which has a structure corresponding to the riblet structure RB and the through-hole 15, against the sheet, it can be said that the riblet structure RB and the through-hole 15 are formed simultaneously. In a case where the through-hole 15 that divides the convex structure 13 is formed as described above, the riblet structure RB, which includes the convex structure 13 divided by the through-hole 15, and the through-hole 15 for dividing the convex structure 13 may be formed simultaneously.

Alternatively, in a case where the through-hole 15 is formed in the riblet sheet 1, the riblet structure RB may be formed after the through-hole 15 is formed. For example, in a case where in a case where the process for forming the through-hole 15 in the sheet by the device, which is configured to form the hole, such as the molding, the light processing, or the machining is performed and then the process for forming the riblet structure RB on the sheet by the riblet processing device (a molding, a light processing, a machining, and the like) that is configured to form the riblet and hat is the same as or different from the hole processing device is performed, it can be said that the riblet structure RB is formed after the through-hole 15 is formed. In this case, the riblet structure RB can be formed subsequently on the sheet in which the through-hole 15 has been already formed. Furthermore, in the case where the through-hole 15 that divides the convex structure 13 is formed as described above, the through-hole 15 may be formed and then the riblet structure RB including the convex structure 13, which is substantially divided by the through-hole 15 that is already formed, may be formed.

Note that a sheet part of the riblet sheet 1 corresponding to the groove area 140 may be made from a material that allows air to pass therethrough but does not allow water to pass therethrough. In this case, the air contained in the air bubble remaining between the riblet sheet 1 and the object OBJ may be released to the space outside the riblet sheet 1 through the sheet part made of the material that allows the air to pass therethrough but does not allow the water to pass therethrough. In this case, the sheet part made of the material that allows the air to pass therethrough but does not allow the water to pass therethrough be considered to serve as the through-hole 15. the sheet part made of the material that allows the air to pass therethrough but does not allow the water to pass therethrough may be regarded as the through-hole 15.

### (5) Modified Example

Next, a modified example of the riblet sheet 1 will be described/

### (5-1) First Modified Example

In a first modified example, the riblet sheet 1 may be manufactured by the imprint lithography using two molds to simultaneously form the riblet structure RB and the through-hole 15.

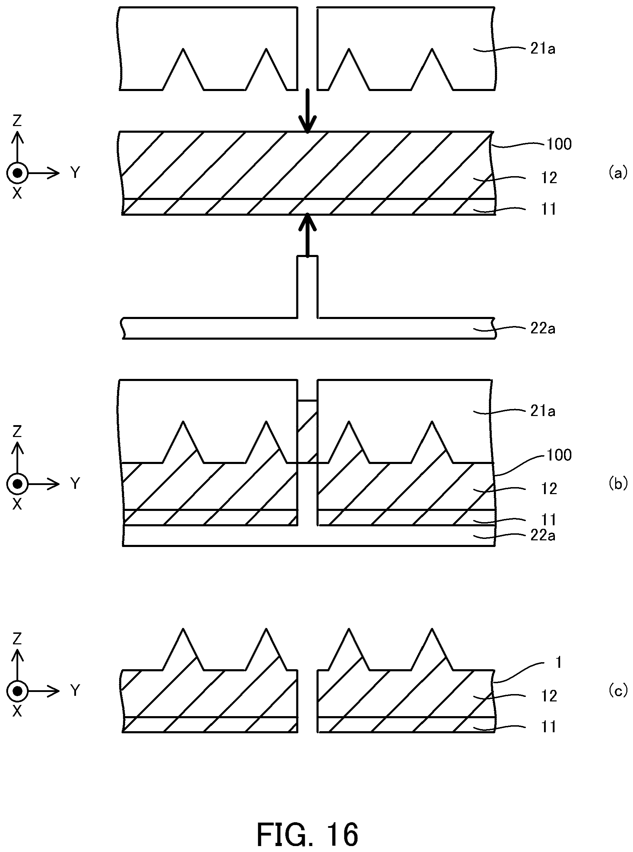

Specifically, in the first modified example, as illustrated in FIG. 16(a), a first in which a mold structure whose shape is complementary to the riblet structure RB is formed and a second mold 22a in which a mold structure whose shape is complementary to the through-hole 15 is formed may be used. Each of the first mold 21a and the second mold 22a may be a mold made of a paper, a mold made of a resin, a mold made of a metal, or a mold made of other material.

Then, as illustrated in FIG. 16(a), the material sheet 100, which is a material of the riblet sheet 1, is sandwiched between the first mold 21a and the second mold 22a. Note that the material sheet 100 may include the adhesive layer 11 in which the through-hole 15 is not formed and the structural layer 12 in which the riblet structure RB and the through-hole 15 are not formed. As a result, as illustrated in FIG. 16(b), the riblet structure RB is transferred to (namely, formed on) the material sheet 100 by the mold structure formed in the first mold 21a. Furthermore, the through-hole 15 is transferred to (namely, formed on) the material sheet 100 by the mold structure formed in the second mold 22a. In this case, to facilitate the transfer of the riblet structure RB and the through-hole 15 to the material sheet 100, at least one of the material sheet 100, the first mold 21a, and the second mold 22a may be heated. Then, the first mold 21a and the second mold 22a are removed from the material sheet 100. As a result, the riblet sheet 1 in which the riblet structure RB and the through-hole 15 have been formed is manufactured, as illustrated in FIG. 16(c).

Note that at least one of the first mold 21a and the second mold 22a may not be removed from the material sheet 100 after the riblet structure RB and the through-hole 15 are formed in the material sheet 100. In this case, at least one of the first mold 21a and the second mold 22a that is not removed from the material sheet 100 may be used as a protective member for protecting the riblet sheet 1. For example, the first mold 21a that is not removed from the material sheet 100 may be used as the protective member for protecting the front surface (namely, the structural layer 12) of the riblet sheet 1. The second mold 22a that is not removed from the material sheet 100 may be used as the protective member for protecting the back surface (namely, the adhesive layer 11) of the riblet sheet 1. Alternatively, the second mold 22a that is not removed from the material sheet 100 may be used as a release member for preventing unintended adhesion of the adhesive surface (namely, the back surface 112 of the adhesive layer 11) included in the back surface of the riblet sheet 1.

### (5-2) Second Modified Example

Next, the riblet sheet 1 in a second modified example will be described. Note that the riblet sheet 1 in the second modified example is referred to as a riblet sheet 1b in the below-described description. Moreover, in the below-described description, a difference between the above-described riblet sheet 1 and the riblet sheet 1b is mainly described. Therefore, in a case where there is no specific description, a feature of the riblet sheet 1b may be the same as a feature of riblet sheet 1. The same applies to a third modified example and subsequent modified examples.

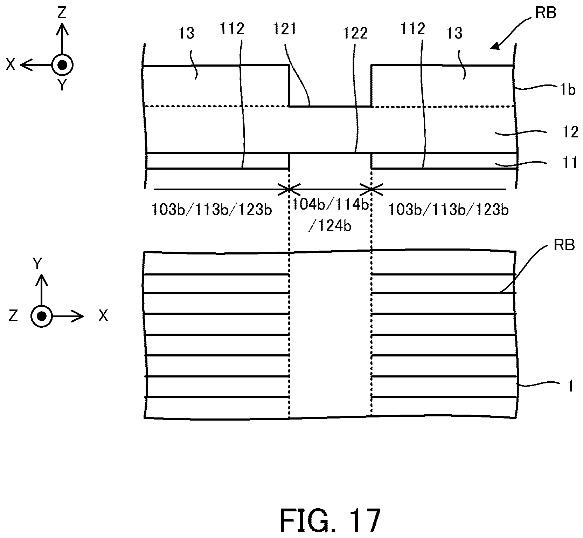

In the second modified example, as illustrated in FIG. 17 that illustrates the riblet sheet 1b in the second modified example, the front surface of the riblet sheet 1b (namely, the front surface 121 of the structural layer 12) may include a riblet surface 123b and a non-riblet surface 124b that is different from the riblet surface 123b. The riblet surface 123b is a surface on which the riblet structure RB is formed. The riblet surface 123b includes the convex area 130 in which the convex structure 13 is formed and the groove area 140 in which the convex structure 13 is not formed (the groove structure 14 is formed), as described above. On the other hand, the non-riblet surface 124b is a surface on which the riblet structure RB is not formed. The non-riblet surface 124b may not include the convex area 130 and the groove area 140.

In this case, as illustrated in FIG. 17, the adhesive layer 11 may be formed on a back surface of the riblet surface 123b of the back surface 122 of the structural layer 12 (namely, a surface part positioned on a back side of the riblet surface 123b). On the other hand, the adhesive layer 11 may not be formed on a back surface of the non-riblet surface 124b of the back surface 122 of the structural layer 12 (namely, a surface part positioned on a back side of the non-riblet surface 124b). Namely, the riblet sheet 1b may include a first sheet part 103b in which the adhesive layer 11 and the structural layer 12 are laminated, and a second sheet part 104b that includes the structural layer 12 but on which the adhesive layer 11 is not formed. In this case, the back surface of the riblet sheet 1 may include a first surface part 113b corresponding to the back surface of the adhesive layer 11 (namely, a back surface of the first sheet part 103b) and a second surface part 114b corresponding to the back surface of the structural layer 12 (namely, a back surface of the second sheet part 104b). Namely, the back surface of the riblet sheet 1b includes the first surface part 113b that is an adhesive surface and a second surface part 114b that is a non-adhesive surface (namely, that is not the adhesive surface).

Especially, as illustrated in FIG. 17, the front surface of the riblet sheet 1b may include two riblet surfaces 123b and the non-riblet surface 124b that is positioned between the two riblet surfaces 123b. Namely, the riblet sheet 1b may include two first sheet parts 103b and the second sheet part 104b that is positioned between the two first sheet parts 103b. Alternatively, the front surface of the riblet sheet 1b may include a plurality of riblet surfaces 123b and a plurality of non-riblet surfaces 124b so that the riblet surfaces 123b and the non-riblet surfaces 124b are arranged alternately in a direction along the front surface of the riblet sheet 1b. Namely, the riblet sheet 1b may include a plurality of first sheet parts 103b and a plurality of second sheet parts 104b so that the first sheet parts 103b and the second sheet parts 104b are arranged alternately in the direction along the front surface of the riblet sheet 1b.

In a case where the riblet sheet 1b in the second modified example is attached to the object OBJ, the first sheet part 103b is attached to the object OBJ but the second sheet part 104b is not attached to the object OBJ. Here, in a case where thermal expansion coefficients between the riblet sheet 1b and the object OBJ are different from each other, there is a possibility that an amount of a deformation of the riblet sheet 1b due to a heat is different from an amount of a deformation of the object OBJ due to a heat. As a result, there is a possibility that a force caused by the difference in the amount of the deformation acts from the object OBJ to the riblet sheet 1b, and the riblet sheet 1b is peeled off from the object OBJ. However, in the second modified example, since the second sheet part 104b is not attached to the object OBJ, the force caused by the difference in the amount of the deformation is absorbed by the second sheet part 104b. As a result, it is less likely or there is no possibility that the riblet sheet 1b is peeled off from the object OBJ.

Note that the through-hole 15 may be formed in the riblet sheet 1b even in the second modified example.

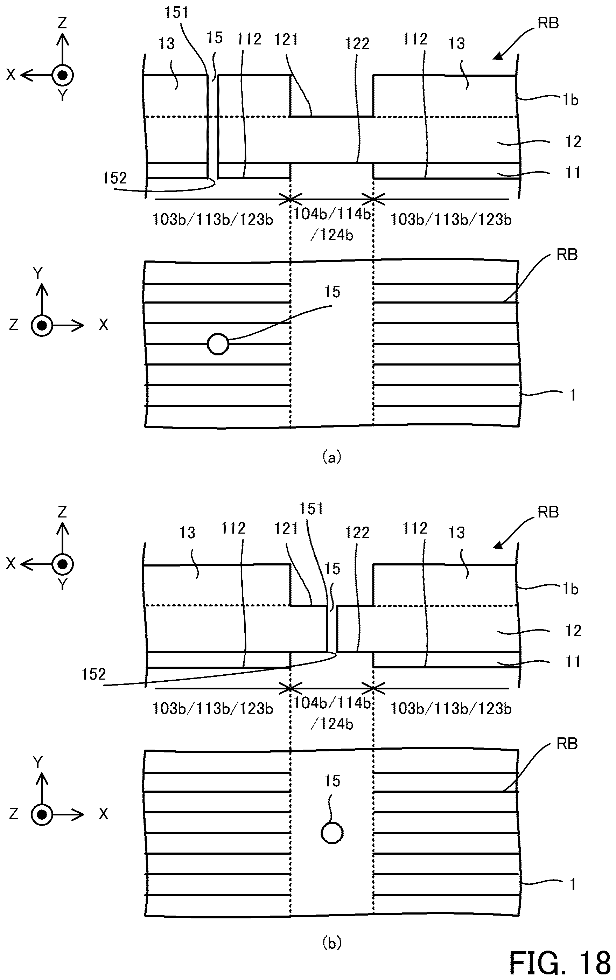

For example, as illustrated in FIG. 18(a), the through-holes 15 may be formed in the first sheet part 103b in which the adhesive layer 11 and the structural layer 12 are laminated. Namely, the through-hole 15 may be formed so that the opening 151 is formed on the riblet surface 123b, which is the front surface of the first sheet part 103b, and the opening 152 is formed on the first surface part 113b, which is the back surface of the first sheet part 103b.

For example, as illustrated in FIG. 18(b), the through-hole 15 may be formed in the second sheet part 104b, which includes the structural layer 12 but on which the adhesive layer 11 is not formed, in addition to or instead of the first sheet part 103b. Namely, the through-hole 15 may be formed so that the opening 151 is formed on the non-riblet surface 124b, which is the front surface of the second sheet part 104b, and the opening 152 is formed on the second surface part 114b, which is the back surface of the second sheet part 104b.

### (5-3) Third Modified Example

Next, the riblet sheet 1 in a third modified example will be described. Note that the riblet sheet 1 in the third modified example is referred to as the riblet sheet 1c in the below-described description.

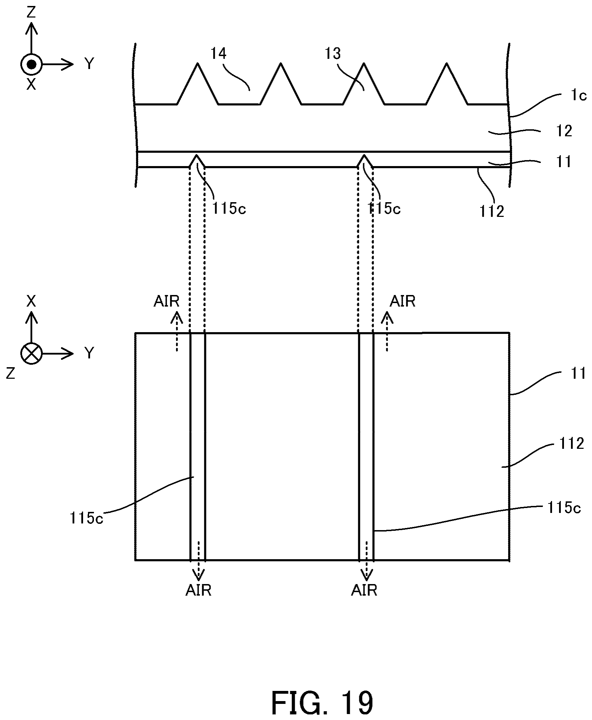

In the third modified example, as illustrated in FIG. 19 that illustrates the riblet sheet 1c in the third modified example, a groove 115c may be formed on the back surface 112 of the adhesive layer 11. The groove 115c is a series of grooves extending to an end part of the back surface 112. Specifically, the groove 115c is a series of grooves extending to the end part of the back surface 112 in a direction along the back surface 112.

Even in a case where the air bubble remains between the riblet sheet 1c and the object OBJ as a result of the attachment of the riblet sheet 1c in the third modified example to the object OBJ, the air (alternatively, any fluid including any gas or liquid, the same applies in the below-described description) contained in the air bubble is removed from the space between the riblet sheet 1 and the object OBJ through the grooves 115c. Namely, the groove 115c serves as a gas release path for removing the air contained in the air bubble. In other words, the groove 115c serves as an air hole for removing the air contained in the air bubble. As a result, even in the third modified example, an effect that is the same as the effect achieved by forming the above-described through-hole 15, which serves as the gas release path, is achievable.

The through-hole 15 may be formed even in the riblet sheet 1c in which the groove 115c is formed. Alternatively, the through-hole 15 may not be formed in the riblet sheet 1c in which the groove 115c is formed.

As illustrated in FIG. 19, a plurality of grooves 115c may be formed on the back surface 112 of the adhesive layer 11. However, a single groove 115c may be formed on the back surface 112 of the adhesive layer 11.

In a case where the plurality of grooves 115c are formed, the plurality of grooves 115c may be formed in a forming aspect that is the same as an forming aspect of the plurality of through-holes 15 described above with reference to FIG. 11 to FIG. 13.

For example, the plurality of grooves 115c may be distributed at equal intervals on the back surface 112 of the adhesive layer 11. The plurality of grooves 115c may include a plurality of grooves 115c that are distributed at equal intervals on the back surface 112 of the adhesive layer 11. For example, the plurality of grooves 115c may include a plurality of first grooves 115c that are distributed at equal intervals along the X-axis direction. For example, the plurality of grooves 115c may include a plurality of second grooves 115c that are distributed at equal intervals along the Y-axis direction. For example, the plurality of grooves 115c may include a plurality of third grooves 115c that are distributed at equal intervals along any direction that is along the XY plane. For example, the plurality of grooves 115c may include a plurality of fourth grooves 115c that are distributed at equal intervals along the X-axis direction and a plurality of fifth grooves 115c that are distributed at equal intervals along the Y-axis direction. For example, the plurality of grooves 115c may include a plurality of sixth grooves 115c that are distributed at equal intervals along any first direction that is along the XY plane, and a plurality of seventh grooves 115c that are distributed at equal intervals along any second direction that is along the XY plane and that is different from the first direction.

For example, the plurality of grooves 115c may be distributed periodically on the back surface 112 of the adhesive layer 11. The plurality of grooves 115c may include a plurality of grooves 115c that are distributed periodically on the back surface 112 of the adhesive layer 11. Namely, a distribution pattern of the plurality of grooves 115c on the back surface 112 of the adhesive layer 11 may be a periodic distribution pattern. For example, the plurality of grooves 115c may be formed so that an unit groove group, which includes at least one groove 115c, repeatedly appears on the back surface 112 of the adhesive layer 11.

For example, the plurality of grooves 115c may be distributed unevenly on the back surface 112 of the adhesive layer 11. As one example, the plurality of grooves 115c may be formed so that a distribution aspect of a plurality of grooves 115c formed on a first surface area of the back surface 112 of the adhesive layer 11 is different from a distribution aspect of the plurality of grooves 115c formed on a second surface area, which is different from the first surface area, of the back surface 112 of the adhesive layer 11.

The first surface area and the second surface area may be areas determined based on the direction along which the riblet sheet 1 is attached to the object OBJ.

As one example, in a case where the riblet sheet 1 is attached to the object OBJ, the riblet sheet 1 is often attached to the object OBJ in order from the end part (in other words, the outer edge) of the riblet sheet 1 as described with reference to FIG. 13(a). In this case, the first surface area may be an area that is closer to the end part (the outer edge) of the riblet sheet 1 than the second surface area is. Here, the possibility of the air bubble being generated at the end part (the outer edge) of the riblet sheet 1, which is first attached to the object OBJ, is higher than the possibility of the air bubble being generated at a part of the riblet sheet 1, which is different from the end part (the outer edge) of the riblet sheet 1 and which is attached to the object OBJ after the end part (the outer edge) of the riblet sheet 1. Therefore, in order to efficiently remove the bubble generated at the end part (the outer edge) of the riblet sheet 1, the number of openings 151 formed per unit area in the first surface area may be larger than the number of openings 151 formed per unit area in the second surface area.

As another example, in a case where the riblet sheet 1 is attached to the object OBJ, one end part 1E of the riblet sheet 1 is often attached to the object OBJ first, and then the riblet sheet 1 is sequentially attached to the object OBJ along the predetermined attachment direction as described with reference to FIG. 13(b). In this case, the first surface area may include the one end part 1E of the riblet sheet 1, which is first attached to the object OBJ, or include an area near the one end part 1E, and the second surface area may include an area that is apart from the one end part 1E along the attachment direction. Here, the possibility of the air bubble being generated near the one end part 1E of the riblet sheet 1, which is first attached to the object OBJ, is higher than the possibility of the air bubble being generated in a part of the riblet sheet 1, which is different from the one end part 1E and which is attached to the object OBJ after the one end part 1E of the riblet sheet 1. Therefore, in order to efficiently remove the air bubble generated at the end part of the riblet sheet 1, the number of openings 151 formed per unit area in the first surface area may be larger than the number of openings 151 formed per unit area in the second surface area.

However, the number of grooves 115c formed per unit area in the first surface area may be smaller than the number of grooves 115c formed per unit area in the second surface area. The number of grooves 115c formed per unit area in the first surface area may be the same as the number of grooves 115c formed per unit area in the second surface area.

Note that one or more grooves 115c formed on the back surface 112 of the adhesive layer 11 may be connected to the opening 152 on the adhesive layer 11 side of the through-hole 15 of the riblet sheet 1. In this case, it is possible to efficiently remove the air, which is released through the groove 115c, in the space between the riblet sheet 1 and the object OBJ. Moreover, one or more grooves 115c formed on the back surface 112 of the adhesive layer 11 may be connected to the back surface of the non-riblet surface 124b in which the adhesive layer 11 is not formed in the second modified example. Even in this case, it is possible to efficiently remove the air in the air bubble.

### (5-4) Fourth Modified Example

Next, the riblet sheet 1 in a fourth modified example will be described. Note that the riblet sheet 1 in the fourth modified example is referred to as the riblet sheet 1d in the below-described description.

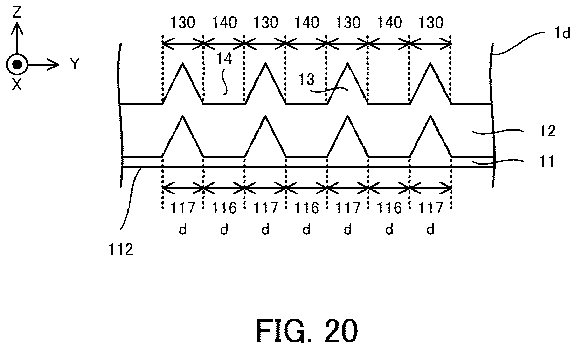

In the fourth modified example, as illustrated in FIG. 20 that illustrates the riblet sheet 1d in the fourth modified example, the adhesive layer 11 may include a first adhesive layer part 116d and a second adhesive layer part 117d. The first adhesive layer part 116d has a first adhesive property. On the other hand, the second adhesive layer part 117d has a second adhesive property that is different from the first adhesive property. Note that the back surface 112 of the adhesive layer 11 may be considered to include a back surface of the first adhesive layer part 116d (namely, a first surface part having the first adhesive property) and a back surface of the second adhesive layer part 117d (namely, a second surface part having the second adhesive property), because the adhesive layer 11 serves as the adhesive surface as described above.

The adhesive property of the adhesive layer 11 depends on a thickness of the adhesive layer 11. Therefore, a thickness of the first adhesive layer part 116d may be different from a thickness of the second adhesive layer part 117d. Specifically, the first adhesive layer part 116d may have a first thickness. On the other hand, the second adhesive layer part 117d may have a second thickness that is different from the first thickness.

As illustrated in FIG. 20, the first adhesive layer part 116d may include a part of the adhesive layer 11 that is opposite to the groove area 140 in which the convex structure 13 is not formed. The first adhesive layer part 116d may include a part of the adhesive layer 11 that overlaps with the groove area 140 along the thickness direction of the riblet sheet 1d. Namely, the first adhesive layer part 116d may include a part of the adhesive layer 11 on which the groove area 140 is formed. On the other hand, the second adhesive layer part 117d may include another part of the adhesive layer 11 that is opposite to the convex area 130 in which the convex structure 13 is formed. The second adhesive layer part 117d may include a part of the adhesive layer 11 that overlaps with the convex area 130 along the thickness direction of the riblet sheet 1d. Namely, the second adhesive layer part 117d may include a part of the adhesive layer 11 on which the convex area 130 is formed.

In this case, the thickness of the second adhesive layer part 117d that overlaps with the convex area 130 may be thicker than the thickness of the first adhesive layer part 116d that overlaps with the groove area 140. Namely, the adhesive layer 11 may include the first adhesive layer part 116d that has the first thickness and the second adhesive layer part 117d that has the second thickness thicker than the first thickness. Typically, the thickness of the first adhesive layer part 116d that is opposite to the groove area 140 is set to a standard value of the thickness of the adhesive layer 11, and the thickness of the second adhesive layer part 117d that is opposite to the convex area 130 may be thicker than the standard value of the thickness of the adhesive layer 11. This is because the convex structure 13 is formed in the convex area 130, and therefore, the thickness of the structural layer 12 does not become excessively thin even in a case where the thickness of the second adhesive layer part 117d that overlaps with the convex area 130 increases.

Generally, the adhesive layer 11, the adhesive property of the adhesive layer 11 is higher as the thickness of the adhesive layer 11 is thicker. Therefore, the second adhesive property of the second adhesive layer part 117d, which is thicker than the first adhesive layer part 116d, is higher than the first adhesive property of the first adhesive layer part 116d, which is thinner than the second adhesive layer part 117d. Therefore, the adhesive layer 11 may include the first adhesive layer part 116d that has the first adhesive property and the second adhesive layer part 117d that has the second adhesive property higher than the first adhesive property. Typically, the adhesive layer 11 may include the first adhesive layer part 116d that has a standard adhesive property, which the adhesive layer 11 is typically expected to have, and the second adhesive layer part 117d that has the adhesive property higher than the standard adhesive property.

According to the riblet sheet 1d in the fourth modified example, the adhesive property of the adhesive layer 11 is improved, compared to a case where the thickness of the adhesive layer 11 is constant (for example, is set to the standard value). As a result, it is less likely that the riblet sheet 1d is unintentionally peeled off from the object OBJ. Namely, the riblet sheet 1d can be firmly attached to the object OBJ.

Note that the through-hole 15 may be formed even in the riblet sheet 1d in the fourth modified example. Alternatively, the through-hole 15 may not be formed in the riblet sheet 1d in the fourth modified example.

Note that a shape of a back surface part of the riblet sheet 1 in which the second adhesive layer part 117d is positioned is not limited to a triangular cross-sectional shape, but may be a rectangular shape, may be a semicircular shape, or may be a polygonal shape in the fourth modified example. Moreover, the second adhesive layer part 117d may also be positioned at a part of the adhesive layer 11 part that is opposite to the groove area 140 in which the convex structure 13 is not formed.

### (5-5) Fifth Modified Example

Next, the riblet sheet 1 in a fifth modified example will be described. Note that the riblet sheet 1 in the fifth modified example is referred to as the riblet sheet 1e in the below-described description.

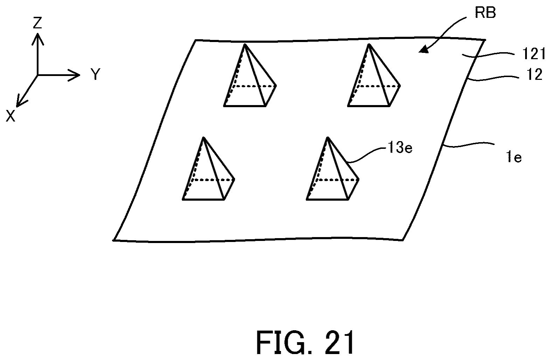

In the above-described description, the riblet structure RB includes the convex structure 13 extending along the predetermined extension direction. On the other hand, in the fifth modified example, as illustrated in FIG. 21 that illustrates the riblet sheet 1e in the fifth modified example, the riblet structure RB may include a convex structure 13e in addition to or instead of the convex structure 13. The convex structure 13e may be different from the convex structure 13 extending along the predetermined extension direction in that it may not extend along the predetermined extension direction. Other feature of the convex structure 13e may be the same as other feature of the convex structure 13.

A plurality of convex structures 13e may be formed on the riblet sheet 1e. The plurality of convex structures 13e may include at least two convex structures 13e arranged along the X-axis direction. The plurality of convex structures 13e may include at least two convex structures 13e arranged along the Y-axis direction. The plurality of convex structures 13e may include at least two convex structures 13e arranged along any direction that is along the XY plane.

Especially, the plurality of convex structures 13e may include at least two convex structures 13e arranged along any first direction that is along the XY plane, and at least two convex structures 13e arranged along any second direction that is along the XY plane and that is different from the first direction. For example, the plurality of convex structures 13e may include at least two convex structures 13e arranged along the X-axis direction and at least two convex structures 13e arranged along the Y-axis direction.

In a case where the plurality of convex structures 13e include both at least two convex structures 13e arranged along the first direction and at least two convex structures 13e arranged along the second direction, the effect of the riblet structure RB for reducing the resistance achieved to some extent even in a case where the flow direction of the fluid changes on the front surface of the riblet sheet 1e. Alternatively, the effect of the riblet structure RB for reducing the resistance achieved to some extent even in a case where an orientation of the riblet sheet 1e relative to the flow direction of the fluid changes. For example, the fluid can flow through a space between the plurality of convex structures 13e (namely, within the groove structure) in any of a first situation in which the fluid flows along the X-axis direction on the front surface of the riblet sheet 1e, a second situation in which the fluid flows along the Y-axis direction on the front surface of the riblet sheet 1e, and a third situation in which the fluid flows along a direction intersecting both the X-axis direction and the Y-axis direction on the front surface of the riblet sheet 1e. As a result, the effect of the riblet structure RB for reducing the resistance achieved to some extent is properly achievable in any of the first situation to the third situation. For example, the resistance reduction effect is achievable even by a movable body, which may be subjected to crosswind during a movement.

Note that the through-hole 15 may be formed even in the riblet sheet 1e in the fifth modified example. Alternatively, the through-hole 15 may not be formed in the riblet sheet 1e in the fifth modified example.

### (5-6) Sixth Modified Example

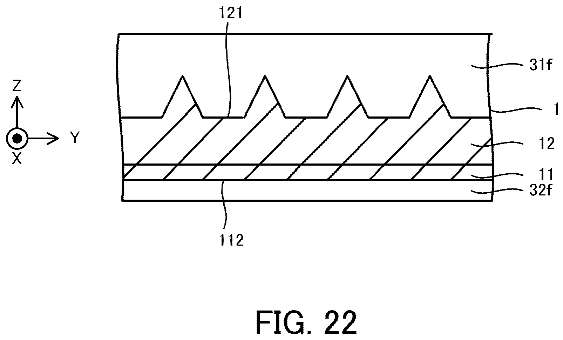

In a sixth modified example, as illustrated in FIG. 22 that illustrates the riblet sheet 1 in the sixth modified example, the front surface 121 of the structural layer 12 may be covered by a protective sheet 31f. The protective sheet 31f may be a member for protecting the structural layer 12. Especially, the front surface 121 of the structural layer 12 may be covered with the protective sheet 31f before the riblet sheet 1 is attached to the object OBJ. In this case, the protective sheet 31f may be removed from the structural layer 12 after the riblet sheet 1 is attached to the object OBJ. Note that the first mold 21a described in the first modified example may be used as the protective sheet 31f, or a member that is different from the first mold 21a may be used.

Furthermore, in the sixth modified example, as illustrated in FIG. 22, the back surface 112 of the adhesive layer 11 may be covered with a protective sheet 32f. The protective sheet 32f may be a member for protecting the adhesive layer 11. The protective sheet 32f may be a member for preventing an unintended adhesion of the adhesive layer 11. Especially, the back surface 112 of the adhesive layer 11 may be covered with the protective sheet 32f before the riblet sheet 1 is attached to the object OBJ. In this case, the protective sheet 32f may be removed from the adhesive layer 11 after the riblet sheet 1 is attached to the object OBJ. In this case, there is an advantage in that it is easy to apply pressure in attaching the riblet sheet 1 to the object OBJ. Note that the second mold 22a described in the first modified example may be used as the protective sheet 32f, or a member that is different from the second mold 22a may be used.

The protective sheet 31f for protecting the structural layer 12 may have a shape that is complementary to the riblet structure RB formed in the structural layer 12. As one example, a resin protective sheet may be used as the protective sheet 31f, and the riblet structure RB formed on the structural layer 12 may be transferred to the protective sheet 31f by forming the resin protective sheet 31f on the structural layer 12. In this case, the protective sheet 31f that has been removed from the structural layer 12 indicates an initial shape of the riblet structure RB formed on the structural layer 12. Therefore, the protective sheet 31f that has been removed from the structural layer 12 may be used as a replica indicating the initial shape of the riblet structure RB formed on the structural layer 12. Specifically, the protective sheet 31f may be used as a replica for guaranteeing a quality of the riblet structure RB by indicating the initial shape of the riblet structure RB. Namely, the protective sheet 31f may be used for ensuring a traceability of the quality of the riblet structure RB.

Note that the through-hole 15 may be formed even in the riblet sheet 1f in the sixth modified example. Alternatively, the through-hole 15 may not be formed in the riblet sheet 1f in the sixth modified example.

### (5-7) Seventh Modified Example

Next, the riblet sheet 1 in a seventh modified example will be described. Note that the riblet sheet 1 in the seventh modified example is referred to as the riblet sheet 1g in the below-described description.

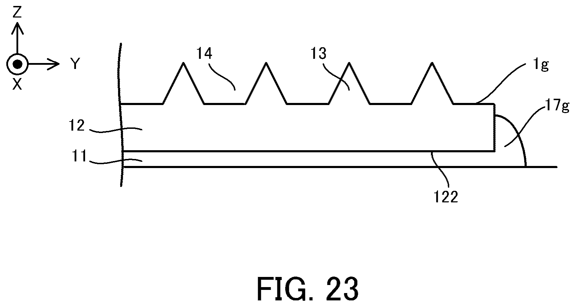

In the seventh modified example, as illustrated in FIG. 23 that illustrates the riblet sheet 1g in the seventh modified example, a part of the adhesive material, which is used to form the adhesive layer 11, may protrude from a side of the adhesive layer 11 and the structural layer 12. In this case, the adhesive material protruding from the side of the adhesive layer 11 and the structural layer 12 may serve as an edge sealer 17g. The edge sealer 17g may serve to prevent air and so on from entering between the object OBJ and the riblet sheet 1e.

The edge sealer 17g may be formed so that a height of the edge sealer 17g decreases as it is more apart from the adhesive layer 11 and the structural layer 12. Namely, the edge sealer 17g may be formed so that a surface of the edge sealer 17g forms a gentle slope surface.

Moreover, the surface of the edge sealer 17g may be sloped from the surface of the object OBJ to the riblet sheet 1g.

Note that the through-hole 15 may be formed even in the riblet sheet 1g in the seventh modified example. Alternatively, the through-hole 15 may not be formed in the riblet sheet 1g in the seventh modified example.

### (5-8) Eighth Modified Example

In the above-described description, the riblet sheet 1 in which the adhesive layer 11 and the structural layer 12 are laminated is attached to the object OBJ. On the other hand, in an eighth modified example, a riblet sheet 1h that includes the structural layer 12 but does not include the adhesive layer 11 may be attached to the object OBJ.

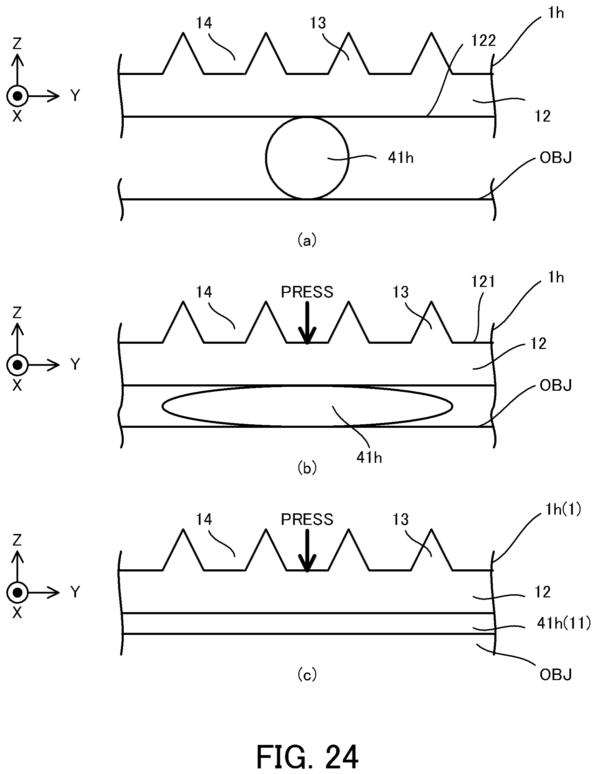

Specifically, as illustrated in FIG. 24(a), an adhesive material 41h may be disposed between the back surface 122 of the structural layer 12 and the object OBJ. Especially, the adhesive material 41h may be disposed at or near a center of the back surface 122 of the structural layer 12 in a planar view.

Then, as illustrated in FIG. 24(b), a force for pressing the structural layer 12 against the object OBJ may be applied to the structural layer 12. In this case, the structural layer 12 may be protected by the protective sheet 31f (see FIG. 22) to prevent the riblet structure RB formed on the front surface 121 of the structural layer 12 from being damaged by the force applied to the structural layer 12. Alternatively, a force for pressing the object OBJ against the structural layer 12 may be applied to the object OBJ.

As a result, as illustrated in FIG. 24(b), the adhesive material 41h disposed between the back surface 122 of the structural layer 12 and the object OBJ is gradually pressed and spread between the back surface 122 of the structural layer 12 and the object OBJ. Then, as the adhesive material 41h is gradually pressed and spread (namely, crushed), the adhesive material 41h eventually becomes the adhesive layer 11 that adheres the back surface 122 of the structural layer 12 to the object OBJ, as illustrated in FIG. 24(c). Note that the riblet sheet 1h including the adhesive layer 11, which is formed by pressing and spreading the adhesive material 41h, and the structural layer 12 may be considered to be equivalent to the riblet sheet 1 described above in the state illustrated in FIG. 24(c).

According to the eighth modified example, since the adhesive material 41h is gradually pressed and spread (namely, crushed), it is unlikely that the air bubble remains between the riblet sheet 1h and the object OBJ. As a result, even in the eighth modified example, an effect that is the same as the effect achieved by forming the above-described through-hole 15, which serves as the gas release path, is achievable.

Note that the adhesive material 41h may be applied to a part at which the protective sheet 32f exists when the riblet sheet 1h is attached to the object OBJ, in a case where the eighth modified example is combined with the sixth modified example. In other words, the protective sheet 32f may be positioned at a position at which the adhesive material 41h is applied.

Note that the through-hole 15 may be formed even in the riblet sheet 1h in the eighth modified example. In this case, the through-holes 15 may be formed by processing the riblet sheet 1 after the adhesive layer 11 is formed by pressing and spreading the adhesive material 41h. This can prevent or reduce a possibility that the adhesive material 41h adheres to an inside of the through-hole 15. Alternatively, the through-hole 15 may not be formed in the riblet sheet 1h in the eighth modified example.

### (5-9) Ninth Modified Example

Next, the riblet sheet 1 in a ninth modified example will be described. Note that the riblet sheet 1 in the ninth modified example is referred to as the riblet sheet 1i in the below-described description.

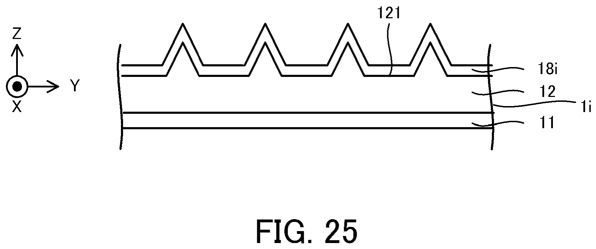

In the ninth modified example, as illustrated in FIG. 25 that illustrates the riblet sheet 1i in the ninth modified example, the riblet sheet 1i may include an additional functional layer 18i in addition to the adhesive layer 11 and the structural layer 12. The additional functional layer 18i may be formed on the front surface 121 of the structural layer 12. Especially, the additional functional layer 18i may be formed on the front surface 121 of the structural layer 12 on which the riblet structure RB is formed. Namely, the riblet sheet 1i may have a laminated structure in which the adhesive layer 11, the structural layer 12, and the additional functional layer 18i are laminated.

The riblet sheet 1i may include a single additional functional layer 18i. Alternatively, the riblet sheet 1i may include a plurality of additional functional layers 18i. For example, the plurality of laminated additional functional layers 18i may be formed on the front surface 121 of the structural layer 12.

The additional functional layer 18i may be a layer for adding an additional function to the riblet sheet 1i. For example, the additional functional layer 18i may include a coating layer containing a paint of a predetermined color. In this case, the additional functional layer 18i may be considered to add an additional function of a design to the riblet sheet 1i. For example, the additional functional layer 18i may include a high-hardness layer for preventing a damage of the riblet structure RB. In this case, the additional functional layer 18i may be considered to add an additional function of a durability to the riblet sheet 1i. For example, the additional functional layer 18i may include an electrical insulation layer for preventing an electrostatic charge of the riblet sheet 1i. In this case, the additional functional layer 18i may be considered to add an additional function of preventing the electrostatic charge to the riblet sheet 1i. For example, the additional functional layer 18i may include an anti-reflection layer for preventing light from being reflected on the front surface of the riblet sheet 1i. In this case, the additional functional layer 18i may be considered to add an additional function of an anti-reflection to the riblet sheet 1i. For example, the additional functional layer 18i may include an anti-glare layer for reducing a gloss of the front surface of the riblet sheet 1i. In this case, the additional functional layer 18i may be considered to add an additional function of an anti-gloss to the riblet sheet 1i.

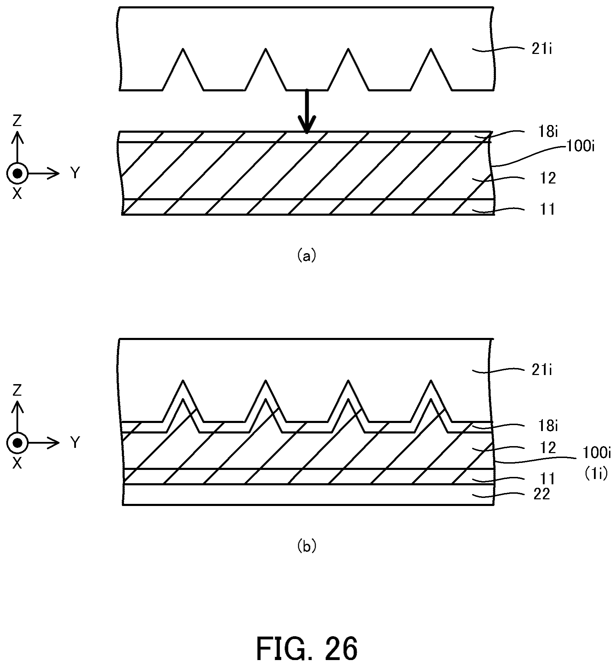

The riblet sheet 1i that includes the additional functional layer 18i may also be manufactured by using a manufacturing method that is the same as the manufacturing method of the riblet sheet 1 that does not include the additional functional layer 18i. For example, as illustrated in FIG. 26(a), the riblet sheet 1i may be manufactured by pressing a mold 21i against a material sheet 100i, which is a material of the riblet sheet 1i. The material sheet 100i may include an adhesive layer 11 on which the riblet structure RB is not yet formed, a structural layer 12, and an additional functional layer 18i. The mold 21i may be a mold in which a mold structure whose shape is complementary to the riblet structure RB is formed. As a result, as illustrated in FIG. 26(b), the riblet structure RB may be transferred to (formed on) the structural layer 12 and the additional functional layer 18i.

Note that the through-hole 15 may be formed even in the riblet sheet 1i in the ninth modified example. Alternatively, the through-hole 15 may not be formed in the riblet sheet 1i in the ninth modified example.

### (5-10) Other Modified Example

In the above-described description, the riblet sheet 1 includes the adhesive layer 11 and the structural layer 12. However, the riblet sheet 1 may not include the adhesive layer 11. Namely, the riblet sheet 1 may include the structural layer 12 but may not include the adhesive layer 11. In other words, the riblet sheet 1 that includes the structural layer 12 but does not include the adhesive layer 11 may be manufactured. In this case, the structural layer 12 may be attached to the object OBJ (for example, a movable body) by using any attachment method. For example, the structural layer 12 may be attached to the object OBJ (for example, the movable body) by using the method described in the eighth modified example. Alternatively, the adhesive layer 11 may be newly formed on the riblet sheet 1 that includes the structural layer 12 but does not include the adhesive layer 11, and then the structural layer 12 may be attached to the object OBJ (for example, the movable body) through the newly formed adhesive layer 11.

Moreover, the opening 151 of the through-hole 15 formed in the riblet sheet 1 may reach the convex structure 13. In other words, at least one of the side surfaces 191 and 192 of the convex structure 13 may be hollowed out by the opening 151. In this case, in a case where the through-hole 15 is formed after the riblet structure RB is formed to manufacture the riblet sheet 1, a control related to the processing of the through-hole 15 can be simplified. In a case where the plurality of openings 151 are formed in the riblet sheet 1, the opening 151 at a predetermined position may be the opening that hollows out at least one of the side surfaces 191 and 192 of the convex structure 13.

### (6) Supplementary Note

Regarding the above-described example embodiment, below described Supplementary notes are further disclosed.

### [Supplementary Note A1]

A sheet member having a riblet structure, wherein
the sheet member has a laminated structure in which a structural layer, on a front surface of which the riblet structure is formed, and an adhesive layer, which is formed on a back surface of the structural layer so that a front surface thereof faces the back surface of the structural layer and which is for attaching the structural layer to an object, are laminated, and
a groove is formed on a back surface of the adhesive layer.

### [Supplementary Note A2]

The sheet member according to the Supplementary Note A1, wherein
the groove extends to an end part of the back surface of the adhesive layer in a direction along the back surface of the adhesive layer.

### [Supplementary Note A3]

The sheet member according to the Supplementary Note A1 or A2, wherein
a plurality of the grooves are formed on the back surface of the adhesive layer.

### [Supplementary Note A4]

The sheet member according to the Supplementary Note A3, wherein
the plurality of grooves include: at least one first groove formed in a first surface part of the back surface of the adhesive layer; and at least one second groove formed in a second surface part of the back surface of the adhesive layer that is different from the first surface part, and
a distribution aspect of the at least one first groove is different from a distribution aspect of the at least one second groove.

### [Supplementary Note A5]

The sheet member according to the Supplementary Note A4, wherein
the first surface part is closer to an end part of the adhesive layer than the second surface part is, and
the number of first grooves per unit area is larger than the number of the second grooves per unit area.

### [Supplementary Note B1]

A sheet member having a riblet structure, wherein
the sheet member includes: a front surface including a first area and a second area; a back surface; and a through-hole formed between the front surface and the back surface,
the first area is a surface of a convex structure that is formed as at least a part of the riblet structure and that protrudes from the second area, and
an opening of the through-hole is formed in the second area.

### [Supplementary Note B2]

The sheet member according to the Supplementary Note B1, wherein
the first area includes a plurality of partial areas, and
the second area includes at least one area between two adjacent partial areas of the plurality of partial areas.

### [Supplementary Note B3]

The sheet member according to the Supplementary Note B1 or B2, wherein
the second area is an area in which the convex structure is not formed.

### [Supplementary Note B4]

The sheet member according to any one of the Supplementary Notes B1 to B3, wherein
the opening is not formed in the first area.

### [Supplementary Note B5]

The sheet member according to any one of the Supplementary Notes B1 to B4, wherein
a width of the opening along a direction that intersects an extension direction of the convex structure is smaller than 100 µm.

### [Supplementary Note B6]

The sheet member according to any one of the Supplementary Notes B1 to B5, wherein
a plurality of openings are formed in the second area.

### [Supplementary Note B7]

The sheet member according to the Supplementary Note B6, wherein
the plurality of openings are distributed at equal intervals on the front surface of the sheet member.

### [Supplementary Note B8]

The sheet member according to the Supplementary Note B6 or B7, wherein
the second area includes a plurality of partial areas along a direction that intersects an extension direction of the convex structure, and
the plurality of openings are distributed at equal intervals along the direction that intersects the extension direction of the convex structure.

### [Supplementary Note B9]

The sheet member according to the Supplementary Note B6 or B7, wherein
the plurality of openings include: a plurality of first openings formed in a first partial area of the second area; and a plurality of second openings formed in a second partial area of the second area that is different from the first partial area, and
a distribution aspect of the plurality of first openings is different from a distribution aspect of the plurality of second openings.

### [Supplementary Note B10]

The sheet member according to the Supplementary Note B9, wherein
the first partial area is closer to an end part of the sheet member than the second partial area is, and
the number of first openings per unit area is larger than the number of second openings per unit area.

### [Supplementary Note B11]

A sheet member having a riblet structure, wherein
the sheet member includes: a through-hole formed between a front surface and a back surface.

### [Supplementary Note B12]

The sheet member according to the Supplementary Note B11, wherein
the front surface includes a first area and a second area,
the first area is a surface of a convex structure that is formed as at least a part of the riblet structure and that protrudes from the second area,
the second area includes a plurality of partial areas, and
an opening of the through-hole is formed so as to span the plurality of partial areas of the second area.

### [Supplementary Note B13]

The sheet member according to the Supplementary Note B12, wherein
the convex structure includes a plurality of convex structures, each of which extends along an extension direction, along a direction that intersects the extension direction of the convex structures, and
the opening is positioned between two convex structures of the plurality of convex structures.

### [Supplementary Note B14]

The sheet member according to any one of the Supplementary Notes B11 to B13, wherein
a plurality of partial areas of the first area, each of which extends along an extension direction, and a plurality of partial areas of the second area, each of which extends along the extension direction, are alternately arranged on the front surface along a direction that intersects the extension direction of the convex structure, and
at least one of the plurality of partial areas of the first area is divided by the through-hole.

### [Supplementary Note B15]

The sheet member according to any one of the Supplementary Notes B11 to B14, wherein
a plurality of partial areas of the first area, each of which extends along an extension direction, and a plurality of partial areas of the second area, each of which extends along the extension direction, are alternately arranged on the front surface along a direction that intersects the extension direction of the convex structure, and
at least one of the plurality of partial areas of the first area is not continuous along the extension direction.

### [Supplementary Note B16]

The sheet member according to any one of the Supplementary Notes B11 to B15, wherein
the sheet member includes a plurality of partial areas in the first area, and
the second area includes at least one area between two adjacent partial areas of the plurality of partial areas.

### [Supplementary Note B17]

The sheet member according to any one of the Supplementary Notes B11 to B16, wherein
the second area is an area in which the convex structure is not formed.

### [Supplementary Note B18]

The sheet member according to any one of the Supplementary Notes B11 to B17, wherein
the opening is apart from the convex structure by a predetermined distance or more in a direction along the front surface of the sheet member.

### [Supplementary Note B19]

The sheet member according to any one of the Supplementary Notes B11 to B18, wherein
the convex structure extends along a predetermined extension direction that is a direction along the front surface of the sheet member, and
a height of an end structure part, which is at least a part of the convex structure and which includes an end part of the convex structure along the extension direction, gradually decreases as the end structure part is closer to the opening along the extension direction.

### [Supplementary Note B20]

The sheet member according to any one of the Supplementary Notes B11 to B19, wherein
an end part of the opening is positioned in the second area.

### [Supplementary Note B21]

The sheet member according to any one of the Supplementary Notes B11 to B20, wherein
an end part of the opening is apart from the convex structure.

### [Supplementary Note B22]

The sheet member according to the Supplementary Note B20 or B21, wherein
the convex structure extends along a predetermined extension direction on the front surface of the sheet member, and
the end part of the opening is an end part of the opening along a direction that intersects the extension direction.

### [Supplementary Note B23]

The sheet member according to any one of the Supplementary Notes B1 to B22, wherein
the through-hole includes openings on the front surface and the back surface, and
at least a part of an inner wall surface of the through-hole is inclined with respect to an intersection direction, which intersects the front surface of the sheet member, from the opening on the front surface toward the opening on the back surface.

### [Supplementary Note B24]

The sheet member according to the Supplementary Note B23, wherein
the opening on the back surface is smaller than the opening on the front surface.

### [Supplementary Note B25]

The sheet member according to the Supplementary Note B23, wherein
the opening on the back surface is larger than the opening on the front surface.

### [Supplementary Note B26]

The sheet member according to any one of the Supplementary Notes B23 to B25, wherein
a pair of inner wall surface parts, which face each other along an extension direction of the convex structure, of the inner wall surface are inclined with respect to the intersection direction.

### [Supplementary Note B27]

The sheet member according to any one of the Supplementary Notes B21 to B24, wherein
at least a part of the inner wall surface is gradually inclined from the opening on the front surface toward the opening on the back surface.

### [Supplementary Note B28]

The sheet member according to any one of the Supplementary Notes B1 to B27, wherein
the front surface includes: a first surface on which the riblet structure is formed; and a second surface which is different from the first surface and on which the riblet structure is not formed,
the back surface includes: a third surface that is a back surface of the first surface; and a fourth surface that is a back surface of the second surface,
the third surface is an adhesive surface,
at least a part of the fourth surface is a non-adhesive surface, and
the sheet member is attached to an object by using the adhesive surface.

### [Supplementary Note B29]

The sheet member according to the Supplementary Note B28, wherein
the sheet member includes a plurality of partial surfaces on the first surface, and
the second surface includes at least one surface between adjacent two of the plurality of partial surfaces.

### [Supplementary Note B30]

The sheet member according to any one of the Supplementary Notes B1 to B29, wherein
the back surface includes an adhesive surface, and
a groove is formed on a back surface of the adhesive layer.

### [Supplementary Note B31]

The sheet member according to the Supplementary Note B30, wherein
the groove extends to an end part of the back surface of the adhesive layer in a direction along the back surface of the adhesive layer.

### [Supplementary Note B32]

The sheet member according to any one of the Supplementary Notes B1 to B31, wherein
the back surface includes an adhesive surface of an adhesive layer, and
the adhesive layer includes: a first adhesive part having a first thickness; and a second adhesive part having a second thickness that is different from the first thickness.

### [Supplementary Note B33]

The sheet member according to any one of the Supplementary Notes B1 to B21, wherein
the back surface includes an adhesive surface, and
the adhesive surface includes: a first adhesive part having a first adhesive property; and a second adhesive part having a second adhesive property that is different from the first adhesive property.

### [Supplementary Note B34]

A sheet member having a riblet structure, wherein
a front surface includes: a first surface on which the riblet structure is formed; and a second surface that is different from the first surface,
a back surface includes a third surface that is opposite to the first surface; and a fourth surface that is opposite to the second surface,
an adhesive surface for attaching the sheet member to an object is formed on the third surface, and
the adhesive surface is not formed on the fourth surface.

### [Supplementary Note B35]

The sheet member according to the Supplementary Note B34, wherein
the sheet member includes a plurality of partial surfaces on the first surface, and
the second surface includes at least one surface between adjacent two of the plurality of partial surfaces.

### [Supplementary Note B36]

The sheet member according to the Supplementary Note B34 or B35, wherein
an opening of a through-hole extending from the front surface toward the back surface is formed in the first surface.

### [Supplementary Note B37]

A sheet member having a riblet structure on a front surface, wherein
a back surface includes an adhesive surface of an adhesive layer, and
the adhesive layer includes: a first adhesive layer part having a first thickness; and a second adhesive layer part having a second thickness that is different from the first thickness.

### [Supplementary Note B38]

The sheet member according to the Supplementary Note B37, wherein
a thickness of the second adhesive part is thicker than a thickness of the first adhesive part.

### [Supplementary Note B39]

The sheet member according to the Supplementary Note B37 or B38, wherein
a second adhesive property of the second adhesive part is higher than a first adhesive property of the first adhesive part.

### [Supplementary Note B40]

The sheet member according to any one of the Supplementary Notes B37 to B39, wherein
the front surface includes a first area and a second area,
the first area is a surface of a convex structure that is formed as at least a part of the riblet structure and that protrudes from the second area,
the second adhesive part is opposite to the first area, and
the first adhesive part is opposite to the second area.

### [Supplementary Note B41]

The sheet member according to the Supplementary Note B40, wherein
the convex structure is not formed in the second area.

### [Supplementary Note B42]

A sheet member having a riblet structure on a front surface, wherein
a back surface includes an adhesive layer, and
the adhesive layer includes: a first adhesive part having a first adhesive property; and a second adhesive part having a second adhesive property that is different from the first adhesive property.

### [Supplementary Note B43]

The sheet member according to the Supplementary Note B42, wherein
a thickness of the second adhesive part is different from a thickness of the first adhesive part.

### [Supplementary Note B44]

The sheet member according to the Supplementary Note B42, wherein
the thickness of the second adhesive part is thicker than the thickness of the first adhesive part.

### [Supplementary Note B45]

The sheet member according to any one of the Supplementary Notes B42 to B44, wherein
the second adhesive property of the second adhesive part is higher than the first adhesive property of the first adhesive part.

### [Supplementary Note B46]

A sheet member having a riblet structure, wherein
the sheet member includes: a first surface on which the riblet structure is formed; and a second surface which is different from the first surface and on which the riblet structure is not formed, on a front surface.

### [Supplementary Note C1]

A movable body including the sheet member according to any one of the Supplementary Notes A1 to A5 and B1 to B46.

### [Supplementary Note C2]

A movable body, wherein
the sheet member according to any one of the Supplementary Notes A1 to A5 and B1 to B46 is attached to a front surface thereof.

### [Supplementary Note C3]

The movable body according to the Supplementary Note C1 or C2, wherein
the movable body includes at least one of a railway vehicle, an automobile, an aircraft, a ship, a windmill, and a turbine.

### [Supplementary Note C4]

A blade member including the sheet member according to any one of the Supplementary Notes A1 to A5 and B1 to B46.

### [Supplementary Note C5]

A blade member, wherein
the sheet member according to any one of the Supplementary Notes A1 to A5 and B1 to B46 is attached to a front surface thereof.

### [Supplementary Note C6]

A windmill including the blade member according to the Supplementary Note C5 or C6.

### [Supplementary Note C7]

An application apparatus that applies the sheet member according to any one of the Supplementary Notes A1 to A5 and B1 to B46 to an object.

### [Supplementary Note C8]

An application apparatus that attaches the sheet member according to any one of the Supplementary Notes A1 to A5 and B1 to B46 to an object.

### [Supplementary Note C8]

A manufacturing apparatus that manufactures the sheet member according to any one of the Supplementary Notes A1 to A5 and B1 to B46.

### [Supplementary Note C9]

A manufacturing method that manufactures the sheet member according to any one of the Supplementary Notes A1 to A5 and B1 to B46.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a riblet sheet, which involves such changes, is also intended to be within the technical scope of the present invention.

### Description of Reference Codes

- 1: riblet sheet
- 11: adhesive layer
- 111: front surface
- 112: back surface
- 12: structural layer
- 121: front surface
- 122: back surface
- 13: convex structure
- 130: convex area
- 131: partial convex area
- 14: groove structure
- 140: groove area
- 141: partial groove area
- 15: through-hole
- 151, 152: opening
- RB: riblet structure
- OBJ: object

## Claims

1. A sheet member having a riblet structure, wherein
the sheet member includes: a front surface including a first area and a second area; a back surface; and a through-hole formed between the front surface and the back surface,
the first area is a surface of a convex structure that is formed as at least a part of the riblet structure and that protrudes from the second area, and
an opening of the through-hole is formed in the second area.

2. The sheet member according to claim 1, wherein
the first area includes a plurality of partial areas, and
the second area includes at least one area between two adjacent partial areas of the plurality of partial areas.

3. The sheet member according to claim 1 or 2, wherein
the second area is an area in which the convex structure is not formed.

4. The sheet member according to any one of claims 1 to 3, wherein
the opening is not formed in the first area.

5. The sheet member according to any one of claims 1 to 4, wherein
a width of the opening along a direction that intersects an extension direction of the convex structure is smaller than 100 µm.

6. The sheet member according to any one of claims 1 to 5, wherein
a plurality of openings are formed in the second area.

7. The sheet member according to claim 6, wherein
the plurality of openings are distributed at equal intervals on the front surface of the sheet member.

8. The sheet member according to claim 6 or 7, wherein
the second area includes a plurality of partial areas along a direction that intersects an extension direction of the convex structure, and
the plurality of openings are distributed at equal intervals along the direction that intersects the extension direction of the convex structure.

9. The sheet member according to claim 6 or 7, wherein
the plurality of openings include: a plurality of first openings formed in a first partial area of the second area; and a plurality of second openings formed in a second partial area of the second area that is different from the first partial area, and
a distribution aspect of the plurality of first openings is different from a distribution aspect of the plurality of second openings.

10. The sheet member according to claim 9, wherein
the first partial area is closer to an end part of the sheet member than the second partial area is, and
the number of first openings per unit area is larger than the number of second openings per unit area.

11. A sheet member having a riblet structure, wherein
the sheet member includes: a through-hole formed between a front surface and a back surface.

12. The sheet member according to claim 11, wherein
the front surface includes a first area and a second area,
the first area is a surface of a convex structure that is formed as at least a part of the riblet structure and that protrudes from the second area,
the second area includes a plurality of partial areas, and
an opening of the through-hole is formed so as to span the plurality of partial areas of the second area.

13. The sheet member according to claim 12, wherein
the convex structure includes a plurality of convex structures, each of which extends along an extension direction, along a direction that intersects the extension direction of the convex structures, and
the opening is positioned between two convex structures of the plurality of convex structures.

14. The sheet member according to any one of claims 11 to 13, wherein
a plurality of partial areas of the first area, each of which extends along an extension direction, and a plurality of partial areas of the second area, each of which extends along the extension direction, are alternately arranged on the front surface along a direction that intersects the extension direction of the convex structure, and
at least one of the plurality of partial areas of the first area is divided by the through-hole.

15. The sheet member according to any one of claims 11 to 14, wherein
a plurality of partial areas of the first area, each of which extends along an extension direction, and a plurality of partial areas of the second area, each of which extends along the extension direction, are alternately arranged on the front surface along a direction that intersects the extension direction of the convex structure, and
at least one of the plurality of partial areas of the first area is not continuous along the extension direction.

16. The sheet member according to any one of claims 11 to 15, wherein
the sheet member includes a plurality of partial areas in the first area, and
the second area includes at least one area between two adjacent partial areas of the plurality of partial areas.

17. The sheet member according to any one of claims 11 to 16, wherein
the second area is an area in which the convex structure is not formed.

18. The sheet member according to any one of claims 11 to 17, wherein
the opening is apart from the convex structure by a predetermined distance or more in a direction along the front surface of the sheet member.

19. The sheet member according to any one of claims 11 to 18, wherein
the convex structure extends along a predetermined extension direction that is a direction along the front surface of the sheet member, and
a height of an end structure part, which is at least a part of the convex structure and which includes an end part of the convex structure along the extension direction, gradually decreases as the end structure part is closer to the opening along the extension direction.

20. The sheet member according to any one of claims 11 to 19, wherein
an end part of the opening is positioned in the second area.

21. The sheet member according to any one of claims 11 to 20, wherein
an end part of the opening is apart from the convex structure.

22. The sheet member according to claim 20 or 21, wherein
the convex structure extends along a predetermined extension direction on the front surface of the sheet member, and
the end part of the opening is an end part of the opening along a direction that intersects the extension direction.

23. The sheet member according to any one of claims 1 to 22, wherein
the through-hole includes openings on the front surface and the back surface, and
at least a part of an inner wall surface of the through-hole is inclined with respect to an intersection direction, which intersects the front surface of the sheet member, from the opening on the front surface toward the opening on the back surface.

24. The sheet member according to claim 23, wherein
the opening on the back surface is smaller than the opening on the front surface.

25. The sheet member according to claim 23, wherein
the opening on the back surface is larger than the opening on the front surface.

26. The sheet member according to any one of claims 23 to 25, wherein
a pair of inner wall surface parts, which face each other along an extension direction of the convex structure, of the inner wall surface are inclined with respect to the intersection direction.

27. The sheet member according to any one of claims 21 to 24, wherein
at least a part of the inner wall surface is gradually inclined from the opening on the front surface toward the opening on the back surface.

28. The sheet member according to any one of claims 1 to 27, wherein
the front surface includes: a first surface on which the riblet structure is formed; and a second surface which is different from the first surface and on which the riblet structure is not formed,
the back surface includes: a third surface that is a back surface of the first surface; and a fourth surface that is a back surface of the second surface,
the third surface is an adhesive surface,
at least a part of the fourth surface is a non-adhesive surface, and
the sheet member is attached to an object by using the adhesive surface.

29. The sheet member according to claim 28, wherein
the sheet member includes a plurality of partial surfaces on the first surface, and
the second surface includes at least one surface between adjacent two of the plurality of partial surfaces.

30. The sheet member according to any one of claims 1 to 29, wherein
the back surface includes an adhesive surface, and
a groove is formed on a back surface of the adhesive layer.

31. The sheet member according to claim 30, wherein
the groove extends to an end part of the back surface of the adhesive layer in a direction along the back surface of the adhesive layer.

32. The sheet member according to any one of claims 1 to 31, wherein
the back surface includes an adhesive surface of an adhesive layer, and
the adhesive layer includes: a first adhesive part having a first thickness; and a second adhesive part having a second thickness that is different from the first thickness.

33. The sheet member according to any one of claims 1 to 21, wherein
the back surface includes an adhesive surface, and
the adhesive surface includes: a first adhesive part having a first adhesive property; and a second adhesive part having a second adhesive property that is different from the first adhesive property.

34. A sheet member having a riblet structure, wherein
a front surface includes: a first surface on which the riblet structure is formed; and a second surface that is different from the first surface,
a back surface includes a third surface that is opposite to the first surface; and a fourth surface that is opposite to the second surface,
an adhesive surface for attaching the sheet member to an object is formed on the third surface, and
the adhesive surface is not formed on the fourth surface.

35. The sheet member according to claim 34, wherein
the sheet member includes a plurality of partial surfaces on the first surface, and
the second surface includes at least one surface between adjacent two of the plurality of partial surfaces.

36. The sheet member according to claim 34 or 35, wherein
an opening of a through-hole extending from the front surface toward the back surface is formed in the first surface.

37. A sheet member having a riblet structure on a front surface, wherein
a back surface includes an adhesive surface of an adhesive layer, and
the adhesive layer includes: a first adhesive layer part having a first thickness; and a second adhesive layer part having a second thickness that is different from the first thickness.

38. The sheet member according to claim 37, wherein
a thickness of the second adhesive part is thicker than a thickness of the first adhesive part.

39. The sheet member according to claim 37 or 38, wherein
a second adhesive property of the second adhesive part is higher than a first adhesive property of the first adhesive part.

40. The sheet member according to any one of claims 37 to 39, wherein
the front surface includes a first area and a second area,
the first area is a surface of a convex structure that is formed as at least a part of the riblet structure and that protrudes from the second area,
the second adhesive part is opposite to the first area, and
the first adhesive part is opposite to the second area.

41. The sheet member according to claim 40, wherein
the convex structure is not formed in the second area.

42. A sheet member having a riblet structure on a front surface, wherein
a back surface includes an adhesive layer, and
the adhesive layer includes: a first adhesive part having a first adhesive property; and a second adhesive part having a second adhesive property that is different from the first adhesive property.

43. The sheet member according to claim 42, wherein
a thickness of the second adhesive part is different from a thickness of the first adhesive part.

44. The sheet member according to claim 42, wherein
the thickness of the second adhesive part is thicker than the thickness of the first adhesive part.

45. The sheet member according to any one of claims 42 to 44, wherein
the second adhesive property of the second adhesive part is higher than the first adhesive property of the first adhesive part.

46. A sheet member having a riblet structure, wherein
the sheet member includes: a first surface on which the riblet structure is formed; and a second surface which is different from the first surface and on which the riblet structure is not formed, on a front surface.
